# EUROPEAN PATENT SPECIFICATION

(11) **EP 4 597 710 B1**
(45) Date of publication and mention of the grant of the patent: **28.10.2026**
(21) Application number: 23907608.6
(22) Date of filing: 15.12.2023
(51) Int. Cl.: H01M 50/258, H01M 50/264, H01M 50/24, H01M 50/682, A62C 3/16, H01M 10/42, H01M 50/502, H01M 50/509, H01M 50/251, H01M 50/204, H01M 50/383

(54) **BATTERY PACK WITH IMPROVED SAFETY**
BATTERIEPACK MIT VERBESSERTER SICHERHEIT
BLOC-BATTERIE PRÉSENTANT UNE SÉCURITÉ AMÉLIORÉE

(30) Priority: 20.12.2022 KR 20220179749; 20.12.2022 KR 20220179750; 14.12.2023 KR 20230181724
(43) Date of publication of application: 06.08.2025
(73) Proprietor: LG Energy Solution, Ltd., Seoul 07335 (KR)
(72) Inventor: YUN, Youngwon, Daejeon 34122 (KR); KIM, Kiyoun, Daejeon 34122 (KR); AHN, Jong Kyu, Daejeon 34122 (KR); KIM, Yongmin, Daejeon 34122 (KR); KIM, Youngbum, Daejeon 34122 (KR); CHOI, Dongmin, Daejeon 34122 (KR)
(74) Representative: Plasseraud IP
(86) International application number: PCT/KR2023/020715
(87) International publication number: WO 2024/136322

(56) References cited:
- EP-A1- 3 890 053
- EP-A1- 4 037 117
- KR-A- 20120 037 018
- KR-A- 20140 005 323
- KR-A- 20190 043 589
- KR-A- 20210 093 636
- US-A1- 2022 059 895

## Description

### [TECHNICAL FIELD]

### Cross Citation with Related Application(s)

This invention claims the benefit of Korean Patent Application No. 10-2022-0179749 filed on December 20, 2022, Korean Patent Application No. 10-2022-0179750 filed on December 20, 2022 and Korean Patent Application No. 10-2023-0181724 filed on December 14, 2023 in the Korean Intellectual Property Office.

The present disclosure relates to a battery pack, and more particularly, to a battery pack and the like configured to facilitate stacking between a plurality of battery packs and to strengthen electrical and mechanical coupling between the stacked battery packs.

### [BACKGROUND]

Currently, commercially available secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

Such secondary batteries are widely used not only in small-sized devices such as portable electronic devices, but also in medium- and large-sized devices such as electric vehicles and energy storage systems (ESS), and the frequency of the use thereof is rapidly increasing. Moreover, recently, the tendency of using home battery packs for storing electrical power is increasing.

Various battery packs, including such home battery packs, include a plurality of battery cells (secondary batteries) to increase capacity and/or output. In particular, in order to increase the energy density of a battery pack, a plurality of battery cells are often arranged densely in a very narrow space.

In such a battery pack configuration, one of the typically important issues is safety. In particular, if a thermal event occurs in any one of the plurality of battery cells included in the battery pack, it is necessary to block such events from propagating to other battery cells. If thermal propagation between battery cells is not properly suppressed, this may lead to thermal events in multiple battery cells included in the battery pack, which may cause problems such as ignition or explosion of the battery pack. Furthermore, the ignition or explosion occurring in a battery pack can cause great damage to human life or property in the surrounding area. In particular, in the case of a home battery pack, if ignition or explosion occurs, it can impair the safety of people living in the house, and the fire may spread to the house and cause a great damage.

EP 4037117 relates to a power cabinet. EP 3890053 discloses a battery pack.

### [DETAILED DESCRIPTION OF THE INVENTION]

### [Technical Problem]

Therefore, it is an object of the present invention to provide a battery pack configured to facilitate stacking between a plurality of battery packs and to strengthen electrical and mechanical coupling between the stacked battery packs.

It is another object of the present invention to provide a battery pack and the like with an improved structure that ensure the stability of the battery packs stacked even in the event of a physical impact from the outside.

It is yet another object of the present invention to provide a battery pack and the like that can properly control thermal events occurring inside the battery pack.

However, the technical problems to be solved by embodiments of the present disclosure are not limited to the above-mentioned problems, and other problems not mentioned herein can be clearly understood by those skilled in the art from the following description.

### [Technical Solution]

According to one embodiment of the present invention, there is provided a battery pack comprising: a cell module assembly including a battery cell stack in which a plurality of battery cells are stacked; an electrical connection unit including a connector for electrical connection between the battery packs stacked in a plurality of numbers; a pack case that houses the cell module assembly and the electrical connection unit in the inside thereof and is opened at its upper surface; and a fire extinguishing tank that covers the upper part of the pack case, the fire extinguishing tank holding a fire extinguishing agent in an internal space of the fire extinguishing tank, wherein the pack case includes a connector through-hole portion in the shape of an opening on a lower surface of the pack case so that the connector can be electrically connected to a battery pack stacked on a lower part, and wherein the fire extinguishing tank includes a connector through-hole portion having an opening on an upper surface of the fire extinguishing tank so that the connector can be electrically connected to a battery pack stacked on an upper part.

The connector through-hole portion has a tubular shape that protrudes upward from the upper surface of the fire extinguishing tank, and in the battery packs stacked in a plurality of numbers, the connector through-hole portion of the fire extinguishing tank of the battery pack stacked on the lower part may be inserted into the connector through-hole portion of the pack case of the battery pack stacked on the upper part.

The connector through-hole portion of the fire extinguishing tank further includes a guide member, wherein the guide member protrudes outward from the outer surface of the connector through-hole portion and extends in the up and down direction, and has structure whose upper part is chamfered, and in the battery packs stacked in a plurality of numbers, the connector through-hole portion of the fire extinguishing tank of the battery pack stacked on the lower part slides along the guide member and may be inserted into the connector through-hole portion of the pack case of the battery pack stacked on the upper part.

When viewing the battery pack from above or below, the connector through-hole portion of the pack case and the connector through-hole portion of the fire extinguishing tank may be provided at positions corresponding to each other in a row.

The connector includes an upper connector for electrically connecting with the battery pack stacked on the upper part and a lower connector for electrically connecting with the battery pack stacked on the lower part, wherein the upper connector and the lower connector are electrically connected to each other, the upper connector is arranged toward the opened upper surface of the connector through-hole portion of the fire extinguishing tank, and the lower connector may be arranged toward the connector through-hole portion of the pack case.

The electrical connection unit further includes a connector housing, an upper surface of the connector housing includes a protrusion portion, and the upper connector is provided on the protrusion portion of the connector housing, the upper connector and the protrusion portion of the connector housing are arranged within the connector through-hole portion of a tubular shape protruding upward from the upper surface of the fire extinguishing tank, and the lower connector may be provided on the lower surface of the connector housing.

The protrusion portion of the connector housing further includes a rib extending in a up and down direction, the connector through-hole portion of the fire extinguishing tank further includes a rib housing portion having a shape that protrudes outward from the outer surface of the connector through-hole portion and extends in the up and down direction, and the rib may be coupled to the rib housing portion such that the connector and the connector housing are fixed within the connector through-hole portion.

The pairs of the rib and the rib housing portion may be provided in a plurality of numbers.

The pack case further includes a set of male guide member and female guide member so as to facilitate stacking between the plurality of stacked battery packs, and in the battery packs stacked in a plurality of numbers, a male guide member of one of the two battery packs adjacent to each other may be coupled to a female guide member of the other of the two battery packs adjacent to each other.

The male guide member has a plate shape that protrudes upward from an upper end part of the pack case, and the female guide member is provided at a lower end part of the pack case, and may have a notch shape, an opening shape, or a concave shape so that the male guide member can be housed.

Both sides of an upper end part of the male guide member may have a chamfered shape.

The set of the male guide member and the female guide member may be provided on at least one of the front surface or the rear surface of the battery pack.

The set of the male guide member and the female guide member may be respectively provided on each of both side surfaces of the battery pack facing each other.

The pack case further includes a set of male fastening member and female fastening member so as to be fastened between the plurality of stacked battery packs, and in the battery packs stacked in a plurality of numbers, a male fastening member of one of the two battery packs adjacent to each other may be coupled to a female fastening member of the other of the two battery packs adjacent to each other.

The male fastening member protrudes upward from an upper end part of the pack case, and the female fastening member may be provided at a lower end part of the pack case, and has a notch shape, an opening shape, or a concave shape so as to house the male fastening member.

The male fastening member includes a locking stop, the female fastening member includes an opening-shaped locking hook, and the locking stop of the male fastening member may be locked and coupled with the locking hook of the female fastening member.

The plurality of stacked battery packs may be stacked in a up and down direction.

The electrical connection between the plurality of battery packs may be connected in series so that voltage bands of the plurality of stacked battery packs can be realized in various ways.

The electrical connection between the plurality of battery packs may be connected in parallel so that the storage capacity of the plurality of stacked battery packs can be realized in various ways.

According to another aspect of the present invention for achieving the above object, there is provided an energy storage system comprising one or more of the above-mentioned battery pack according to the present disclosure.

### [Advantageous Effects]

According to one aspect of the present disclosure, a battery pack with improved thermal and mechanical stability can be provided. Also, a battery pack with improved electrical connectivity can be provided.

Particularly, according to one embodiment of the present disclosure, even if a thermal event occurs inside the battery pack, such a thermal event can be quickly controlled.

Moreover, if an issue such as thermal runaway or ignition occurs in some of the battery cells among the plurality of battery cells included in the battery pack, such an issue can be effectively prevented from being transferred to other modules.

Particularly, according to one embodiment configuration of the present disclosure, a new part for injecting a fire extinguishing agent does not need to be added, thereby making it possible to provide a battery pack with excellent manufacturability and economic efficiency.

According to one aspect of the present disclosure, it is not necessary to design a special waterproof and dustproof structure.

Further, according to one aspect of the present disclosure, products with various voltage bands and/or storage capacities can be provided by stacking the same type of battery packs stacked in a plurality of numbers.

In addition, some other additional effects can be achieved by various embodiments of the present disclosure. Various effects obtainable from the present disclosure will be described in detail in respective embodiments, or the description of effects that can be easily understood by those skilled in the art will be omitted.

### [BRIEF DESCRIPTION OF THE DRAWINGS]

The accompanying drawings illustrate preferred embodiments of the present invention and, together with the following descriptions, serve to provide further understanding of the technical spirit of the present disclosure. However, the present invention is defined by the appended claims and is not to be construed as being limited to the drawings.
FIG. 1 is an exploded perspective view schematically showing the configuration of a battery pack according to an embodiment of the present disclosure.
FIG. 2 is a diagram schematically showing the configuration in which a fire extinguishing agent is discharged from the battery pack of FIG. 1.
FIG. 3 is a perspective view schematically showing the configuration of a battery pack according to another embodiment of the present disclosure.
FIG. 4 is a cross-sectional view taken along line A4-A4' in FIG. 3.
FIG. 5 is an exploded perspective view schematically showing the configuration of a battery pack according to another embodiment of the present invention.
FIG. 6 is a perspective view of a cell module assembly included in the battery pack of FIG. 5.
FIG. 7 is a perspective view of a blocking member included in the battery pack of FIG. 5.
FIG. 8 is a perspective view of a pack case included in the battery pack of FIG. 5.
FIG. 9 is a top view of the pack case of FIG. 8.
FIG. 10 is a bottom view of the pack case of FIG. 8.
FIG. 11 is a diagram illustrating a case where the cell module assembly of FIG. 8 is housed in a pack case.
FIG. 12 is a perspective view of a fire extinguishing tank included in the battery pack of FIG. 5.
FIG. 13 is a perspective cross-sectional view of the fire extinguishing tank of FIG. 12.
FIG. 14 is a perspective view of the outer cover included in the battery pack of FIG. 5.
FIG. 15 is a perspective view of an electrical connection unit included in the battery pack of FIG. 5.
FIG. 16 is a rear view of the electrical connection unit of FIG. 15.
FIG. 17 is a perspective view of a battery pack in which all the constituent elements of the above-mentioned battery pack are coupled with each other with reference to FIGS. 5 to 15.
FIG. 18 is a perspective view of a state in which the outer cover is removed from the battery pack of FIG. 17.
FIG. 19 is a perspective view of FIG. 18 rotated by 180 degrees.
FIG. 20 is a bottom perspective view of FIG. 19.
FIG. 21 shows a case where the battery packs of FIG. 19 are provided in a plurality of numbers and stacked in the up and down direction.
FIG. 22 is a partial enlarged view of FIG. 17.
FIG. 23 is a view of the battery pack of FIG. 19 viewed from another angle.
FIGS. 24 and 25 are partial enlarged views of the guide member of the pack case of FIG. 23, respectively.
FIG. 26 is a partial enlarged view of the fastening member of the pack case of FIG. 23.
FIG. 27 is a perspective view schematically showing the battery pack of FIGS. 1 to 20.
FIGS. 28 and 29 are diagrams showing an embodiment in which the pack cases shown in FIG. 27 are stacked in mutually different numbers.

### [DETAILED DESCRIPTION OF THE EMBODIMENTS]

Hereinafter, preferred embodiments of the present invention will be described in detail with reference to the accompanying drawings.

A description of portions that are not related to the description will be omitted for clarity, and same reference numerals designate same or like elements throughout the description.

Further, in the drawings, the size and thickness of each element are arbitrarily illustrated for convenience of description, and the present invention is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

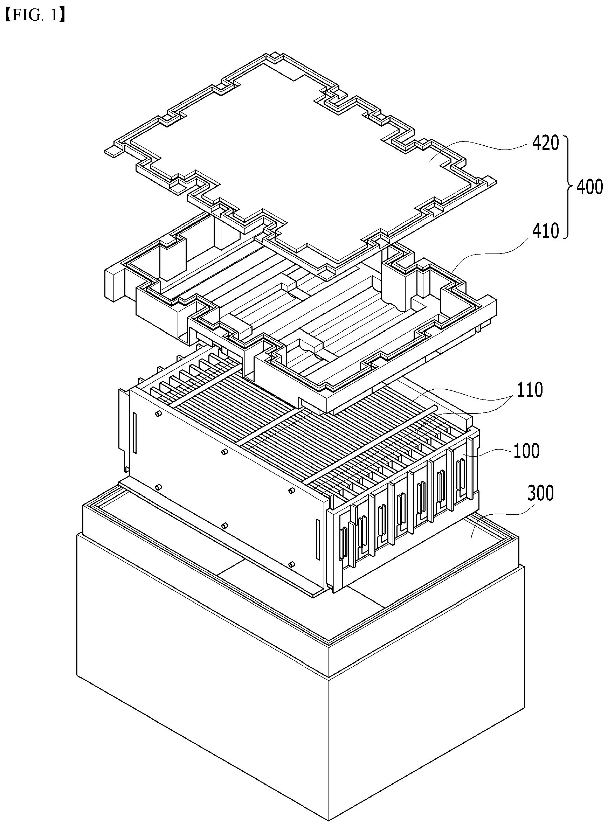

FIG. 1 is an exploded perspective view schematically showing the configuration of a battery pack according to an embodiment of the present disclosure.

Referring to FIG. 1, the battery pack according to the present disclosure includes a cell module assembly 100, a pack case 300, and a fire extinguishing tank 400.

The cell module assembly 100 may include one or more battery cells 110. Here, each battery cell 110 may mean a secondary battery. The secondary battery may include an electrode assembly, an electrolyte, and a battery case. Particularly, the battery cell 110 provided in the cell module assembly 100 may be a pouch type secondary battery. However, other forms of secondary batteries, such as cylindrical batteries or prismatic batteries, may also be employed in the cell module assembly 100 of the present disclosure.

A plurality of secondary batteries may form the cell module assembly 100 in a shape stacked with each other. That is, the battery cell stack can form the cell module assembly 100. For example, the plurality of battery cells 110 may be stacked in such a manner that they are arranged in a horizontal direction (X-axis direction in the figure) while being erected in an up and down direction (Z-axis direction in the figure). Each battery cell 110 may be provided with an electrode lead, wherein the electrode lead may be located at both end parts, or may be located at one end part of each battery cell 110. A secondary battery in which electrode leads protrude in both directions may be called a bidirectional cell, and a secondary battery in which electrode leads protrude in one direction can be called a unidirectional cell. In FIG. 1, a bidirectional cell is illustrated. However, the present disclosure is not limited by a specific type or form of the secondary battery, and various forms of secondary batteries known at the time of filing the present invention can be employed in the cell module assembly 100 of the present disclosure.

The pack case 300 may be configured to have an empty space formed therein and house the cell module assembly 100 in the internal space. For example, the pack case 300 may be configured in a box shape as shown in FIG. 1. The box-shaped pack case 300 may be integrally molded, or may be made by coupling at least one surface with an adjacent surface.

The fire extinguishing tank 400 holds a fire extinguishing agent. Particularly, the fire extinguishing tank 400 comprises an internal space and holds a fire extinguishing agent in the internal space. For example, the fire extinguishing tank 400 may comprise a lower tank 410 and an upper cover 420, as shown in FIG. 1. Here, the lower tank 410 is configured in the form of a box having an opened upper part, and can provide a space where a fire extinguishing agent can be held. In addition, the upper cover 420 may be configured to cover the upper opening part of the lower tank 410 and seal the fire extinguishing agent holding space of the lower tank 410.

The fire extinguishing tank 400 may be housed inside the pack case 300. In particular, the fire extinguishing tank 400 may be arranged on an upper side of the cell module assembly 100 in the internal space of the pack case 300.

According to such an embodiment configuration of the present disclosure, a fire extinguishing agent is discharged from the fire extinguishing tank 400 located on the upper side of the cell module assembly 100, so that the thermal event of the cell module assembly 100 can be more easily controlled. Particularly, the fire extinguishing agent discharged from the fire extinguishing tank 400 can easily move downward by gravity. Therefore, heat or fire suppression of the cell module assembly 100 using a fire extinguishing agent can be performed more easily.

Particularly, when the cell module assembly 100 is provided with a plurality of battery cells 110 arranged side by side in the horizontal direction, that is, in the left and right direction (X-axis direction), as shown in FIG. 1, a fire extinguishing agent can be easily supplied to all battery cells 110 if the fire extinguishing agent is discharged from the fire extinguishing tank 400 located at the upper part. Therefore, according to such an embodiment configuration, thermal event suppression for the entire cell module assembly 100 can be performed more effectively.

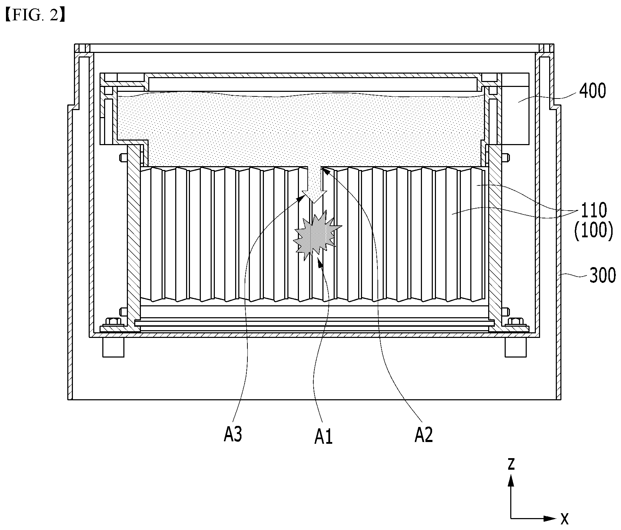

The fire extinguishing tank 400 may be configured to discharge a fire extinguishing agent toward the cell module assembly 100 when heat is applied from the cell module assembly 100. This will be described in more detail with reference to FIG. 2.

FIG. 2 is a diagram schematically showing the configuration in which a fire extinguishing agent is discharged from the battery pack of FIG. 1.

Referring to FIG. 2, a fire extinguishing tank 400 is located at the upper part of the cell module assembly 100. A thermal event such as overheating, ignition, or thermal runaway may occur in a specific battery cell 110, such as a portion indicated by A1 among a plurality of battery modules stacked in a left and right direction (e.g., the X-axis direction in the figure). In this case, the heat generated in the corresponding battery cell 110 may be applied to the fire extinguishing tank 400, such as a portion indicated by A2 in FIG. 2. Then, the fire extinguishing agent may be discharged from the fire extinguishing tank 400, as indicated by arrow A3.

Particularly, the fire extinguishing tank 400 may be configured to be at least partially melted by heat applied from the cell module assembly 100. For example, in the configuration of FIG. 2, the portion indicated as A2 of the fire extinguishing tank 400 may be melted by heat. Then, through the portion melted in this way, the fire extinguishing agent can be discharged, as indicated by an arrow A3.

For this purpose, the fire extinguishing tank 400 may be constructed of a material that can be at least partially melted by the heat applied from the cell module assembly 100. For example, the fire extinguishing tank 400 may be wholly constructed of a plastic material. In particular, the fire extinguishing tank 400 may be constructed in the form of a plastic injection material.

Further, the fire extinguishing tank 400 can be configured to be melted by venting gas or heat ejected from the battery cell 110. For example, when a thermal runaway occurs in the battery cell 110 and venting gas is ejected, the venting gas may be in a high-temperature state of a certain temperature or higher. The fire extinguishing tank 400 may be constructed of a material and/or form that can be melted by the high-temperature venting gas. Alternatively, when a thermal runaway occurs in the battery cell 110, the temperature of the battery cell 110 may be higher than the normal state even if the venting gas is not ejected. The fire extinguishing tank 400 may be constructed of a material and/or form that can be melted by heat applied from the battery cell 110 in such an abnormal high-temperature state.

In particular, the fire extinguishing tank 400 may be configured so that the base plate 411 is melted by a high temperature of heat and/or gas generated in the thermal event of the battery cell 110. In this case, the fire extinguishing agent may flow into the bottom melting section of the fire extinguishing tank 400 and be discharged downward. Therefore, the fire extinguishing agent can be quickly injected into the cell module assembly 100.

According to such an embodiment configuration of the present disclosure, the fire extinguishing agent is injected in such a way that the injection material melts, thereby effectively suppressing thermal events inside the battery pack, and also minimizing thermal event propagation between battery cells 110.

The fire extinguishing tank 400 may hold a fire extinguishing agent in a liquid state. In this case, the fire extinguishing agent may be referred to as fire extinguishing liquid. For example, the fire extinguishing tank 400 may hold water or other cooling liquid as a fire extinguishing agent. Further, the fire extinguishing tank 400 can hold antifreeze as a fire extinguishing agent. In particular, when the battery pack is used in low-temperature seasons such as winter or in low-temperature areas such as polar regions, the fire extinguishing tank 400 can hold antifreeze, which does not easily freeze even at low temperatures, as a fire extinguishing agent. Moreover, in the case of a home battery pack, since it can be located outdoors, antifreeze can be provided as a fire extinguishing agent.

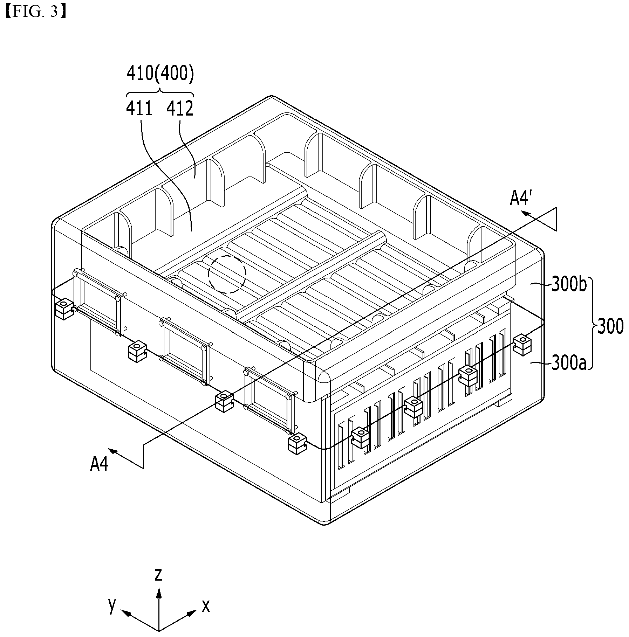

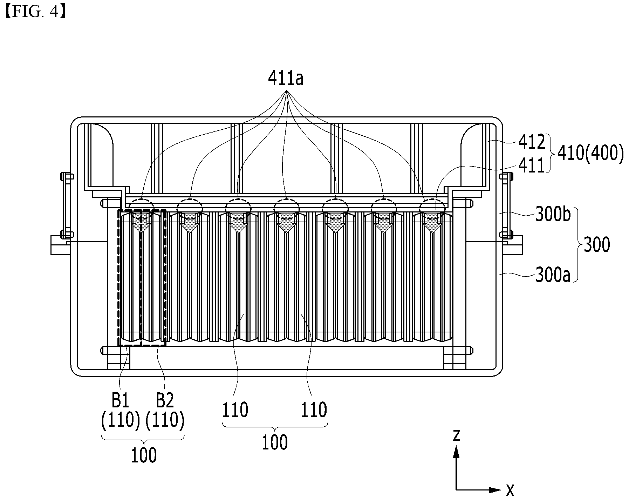

The fire extinguishing tank 400 may be configured so that the thickness of the base plate 411 varies depending on its position. This will be described in more detail with reference to FIGS. 3 and 4.

FIG. 3 is a perspective view schematically showing the configuration of a battery pack according to another embodiment of the present disclosure. However, in FIG. 3, for convenience of explanation, some components are illustrated transparently. FIG. 4 is a cross-sectional view taken along line A4-A4' in FIG. 3. Regarding various embodiments included in this specification, including the present embodiment, detailed descriptions of the parts that can be applied identically or similarly to the portions described in other embodiments will be omitted, and the portions where there are differences will be mainly described.

Referring to FIGS. 3 and 4, the fire extinguishing tank 400 may include a base plate 411 and a side wall 412. Here, the side wall 412 may be configured to protrude upward from the edge of the base plate 411. Further, the lower part and the side part of the fire extinguishing tank 400 are limited by the base plate 411 and the side wall 412, thereby forming a space capable of holding the fire extinguishing agent. At this time, the upper part of the fire extinguishing tank 400 may be sealed by the pack case 300. That is, as shown in FIG. 4, the pack case 300 includes a lower case 300a and an upper case 300b, and the upper part of the fire extinguishing tank 400 is covered by the upper case 300b, so that a fire extinguishing agent may be held inside the fire extinguishing tank 400. Alternatively, the fire extinguishing tank 400 may be configured so as to include an upper cover 420 to seal the upper part of the fire extinguishing agent holding space, as shown in FIG. 1.

In this manner, in the configuration of the fire extinguishing tank 400 provided with the base plate 411, the base plate 411 may be formed to have different thicknesses for each portion. In particular, the fire extinguishing tank 400 may be configured to have a thin thickness in certain portions, such as the portion indicated by 411a in FIGS. 3 and 4. For example, the base plate 411 of the fire extinguishing tank 400 is constructed in the form of a plastic injection material having a thickness of 1 mm as a whole, and the portion indicated by 411a may be configured to have a thickness of 0.5 mm.

In particular, a thinly formed portion of the base plate 411 of the fire extinguishing tank 400 may function as a fragile portion 411a. That is, when the temperature rises in the cell module assembly 100, such a fragile portion 411a may be damaged first. Further, if the fragile portion 411a is damaged, the fire extinguishing agent held inside the fire extinguishing tank 400 may be discharged toward the cell module assembly 100 via the fragile portion 411a.

The fragile portion 411a may be provided in a plurality of numbers. For example, the fragile portion 411a may have a shape narrow in width and long in length. That is, it may have a linear shape and may be arranged in parallel with one edge of the fire extinguishing tank 400, and the fragile portions 411a may be arranged in parallel to each other. According to the above embodiment configuration, if venting gas, fire or the like occurs due to thermal runaway on the cell module assembly 100 side, a structure for injecting a fire extinguishing agent such as cooling water does not need to be separately provided. Therefore, the configuration for injection the fire extinguishing agent inside the battery pack can be realized with a simple structure. Furthermore, in such a configuration, when an event occurs, the fire extinguishing agent can be discharged through the fragile portion 411a formed in a thin thickness, and thus, the portion where the fire extinguishing agent is discharged can be designated in advance.

In the above embodiment configuration, as shown in FIG. 4, a plurality of fragile portions 411a may be provided in one fire extinguishing tank 400. Moreover, the plurality of fragile portions 411a can be arranged on the base plate 411 of the fire extinguishing tank 400 while being spaced apart by a prescribed distance along the stacking direction of the cell module assembly 100. For example, in the cell module assembly 100, a plurality of battery cells 110 may be stacked in the left and right direction (X-axis direction), and in the base plate 411 of the fire extinguishing tank 400 located at the upper part of the cell module assembly 100, a plurality of fragile portions may also be arranged in the left and right direction while being spaced apart from each other.

In particular, the fire extinguishing tank 400 may be configured such that the fragile portion 411a having a relatively thin thickness is located in the central portion between cells stacked in the horizontal direction.

For example, in the configuration of FIG. 4, B1 and B2, which are two battery cells 110, are arranged adjacent to each other in the left and right direction in the left side portion of the cell module assembly 100. At this time, the fragile portion 411a located on the leftmost side among several fragile portions 411a may be arranged between B1 and B2 in the left and right direction. That is, the fragile portion 411a may be located at an upper part of B1 and B2 in the up and down direction (Z-axis direction), but may be located between B1 and B2 in the horizontal direction (X-axis direction). Further, the battery cells 110 other than B1 and B2 can also be configured such that one fragile portion 411a is located in the space between respective two adjacent battery cells 110 in the horizontal direction.

According to such an embodiment configuration of the present disclosure, when a thermal event occurs in a specific battery cell 110 and heat is applied to the fragile portion 411a located at the upper part, the fragile portion 411a may be damaged. And, the fire extinguishing agent is discharged through the damaged fragile portion 411a, and a fire extinguishing agent may flow into the space between adjacent battery cells 110 as indicated by the arrow in FIG. 4.

Therefore, according to such an embodiment configuration, it is possible to more effectively prevent thermal events from being transmitted between battery cells 110. Further, according to the embodiment configuration of the present disclosure, it is possible to intensively inject the fire extinguishing agent around the battery cell 110 where a thermal event such as overheating or ignition has occurred, so that more effective cooling and extinguishing operations can be performed. Therefore, according to the above embodiment configuration, when a fire or the like occurs inside the battery, it may be possible to inject a fire extinguishing agent in the right time and the right place without any other parts except for the fire extinguishing tank 400.

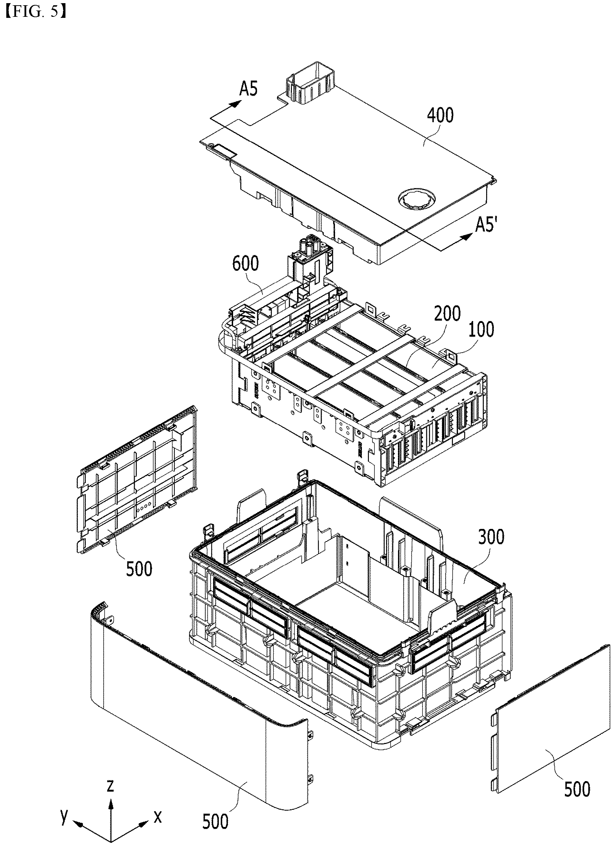

FIG. 5 is an exploded perspective view schematically showing the configuration of a battery pack according to another embodiment of the present disclosure.

Referring to FIG. 5, the battery pack includes a cell module assembly 100, a blocking member 200, a pack case 300, a fire extinguishing tank 400, an outer cover 500, and an electrical connection unit 600.

Also in FIG. 5, the cell module assembly 100 may be configured such that the plurality of battery cells 110 (see FIG. 1) are stacked in a shape arranged in a horizontal direction (e.g., the X-axis direction in the figure) while being erected in the up and down direction (e.g., the Z-axis direction in the figure). At this time, the longitudinal direction of the battery cell 110 is, for example, the Y-axis direction in the figure. For convenience of understanding, the illustration of the battery cell 110 is omitted in FIG. 5. When the battery cell 110 is, for example, a pouch type battery cell or a prismatic battery cell, the battery cell 110 is arranged side by side (in parallel) with the blocking member 200.

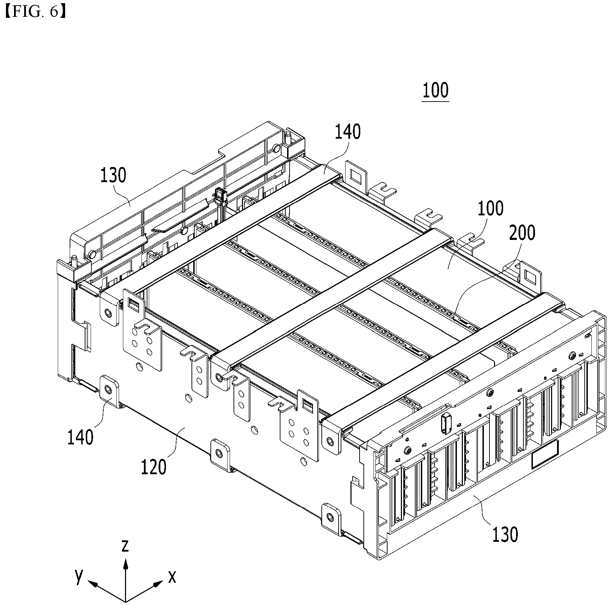

FIG. 6 is a perspective view of a cell module assembly 100 included in the battery pack of FIG. 5.

For reference, in order to more clearly illustrate the components included in the cell module assembly 100, FIG. 6 shows the remaining components excluding the plurality of battery cells 110. The plurality of battery cells 110 may be normal pouch type battery cells or prismatic battery cells.

Referring to FIG. 6, a pair of busbar housings 130 are arranged on the front and rear surfaces of the stack of a plurality of battery cells 110. Each of the busbar housings 130 is arranged in a direction perpendicular to the longitudinal direction of the battery cell 110 (e.g., the X-axis direction in the figure).

A pair of end plates 120 are provided at both side ends of the stack of the plurality of battery cells 110, respectively. The end plate 120 is arranged in parallel with the battery cell 110. A pair of end plates 120 each connect a pair of busbar housings 130.

Each of the upper and lower sides between the pair of end plates 120 may include at least one strap 140 that connects between the pair of end plates 120. The strap 140 strengthens the binding of the cell module assembly 100. More specifically, it strengthens the binding between the pair of end plates 120 and the stack of the plurality of battery cells 110 arranged between them. Thereby, it is possible to prevent the alignment of the stack of the plurality of battery cells 110 from being disturbed.

In addition, since the description regarding the cell module assembly 100 overlaps with that described in FIG. 1, reference is made to those described above in relation to FIG. 1.

Meanwhile, as shown in FIG. 5, a plurality of battery cells 110 can be grouped into a predetermined number and housed. Further, as shown in FIGS. 5 to 7, a blocking member 200 is provided between a group of a plurality of battery cells 110 (a predetermined number) and an adjacent group of a plurality of battery cells 110 (a predetermined number).

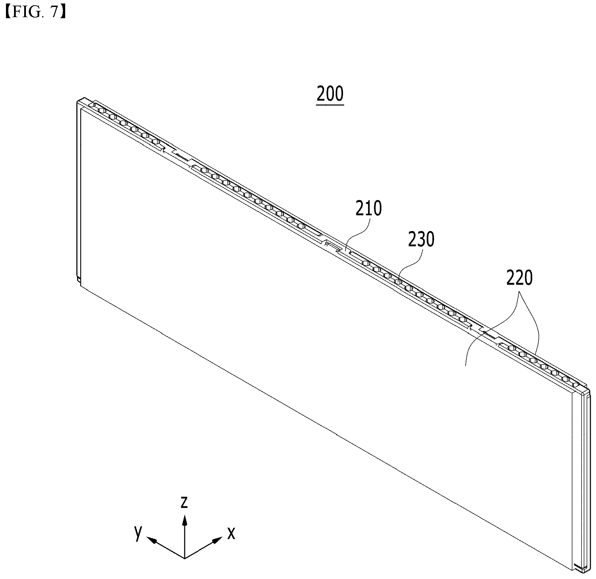

FIG. 7 is a perspective view of a blocking member 200 included in the battery pack of FIG. 5. The blocking member 200 may be configured to be interposed between adjacent battery cells 110 to block heat. For example, when a thermal event occurs in some of the battery cells 110 and heat or high-temperature venting gas is generated, the generated heat or gas may be suppressed or blocked from being transferred to the adjacent battery cell 110 by the blocking member 200. Further, the blocking member 200 can play a role of blocking flames or sparks emitted from a specific battery cell 110.

The blocking member 200 has a substantially plate-like shape. The blocking member 200 may be configured in a plate shape being erected in the up and down direction. Moreover, the blocking member 200 may have a height that is the same as or similar to the height of the battery cell 110 being erected in the up and down direction. The height of the blocking member 200 may be smaller or larger than the height of the battery cell 110.

A plurality of blocking member 200 may be included depending on the number of battery cells. And, as described above, the blocking member 200 can be stacked together with the battery cells 110 to form the cell module assembly 100.

According to such an embodiment configuration of the present disclosure, in a battery pack containing a plurality of battery cells 110, the blocking member 200 can effectively prevent propagation of thermal runaway between battery cells.

Further, the blocking member 200 may largely have a three-layer structure. For example, a pair of swelling pads 220 are provided on both surfaces of the support plate 210, respectively. The support plate 210 maintains the shape and rigidity of the blocking member 200 and blocks flames or sparks emitted from the battery cells 110 from being transferred between the battery cells 110. The support plate 210 may be made of, for example, a metal material. The swelling pad 220 reduces the pressure applied to the battery cell 110 by the support plate 210 when the battery cell 110 swells. The swelling pad 220 may be made of, for example, silicone or soft plastic material.

On the other hand, the support plate 210 includes a plurality of through holes 230 formed by penetrating the support plate 210 in the up and down direction, and the plurality of through holes 230 are arranged along the longitudinal direction of the support plate 210.

When fire extinguishing agent (fire extinguishing liquid) is injected into the cell module assembly 100 from the fire extinguishing tank 400 located at the upper part of the cell module assembly 100, a fire extinguishing agent (fire extinguishing liquid) also enters the plurality of through holes 230. That is, as the fire extinguishing agent (fire extinguishing liquid) remains in the plurality of through holes 230, the battery cell 110 in which the thermal event has occurred can be cooled and extinguished more effectively.

The plurality of through holes 230 may be configured to be opened on both the upper and lower surfaces of the support plate 210. Alternatively, the plurality of through holes 230 may have a shape in which only the upper surface is opened and the lower surface is closed so that the fire extinguishing agent (fire extinguishing liquid) can remain within the through holes 230 for a longer period of time. In the former case, if the support plate 210 of the blocking member 200 is arranged in close contact with the inner lower surface of the pack case 300, the fire extinguishing agent (fire extinguishing liquid) may remain in the through hole 230 for a long period of time as in the latter case.

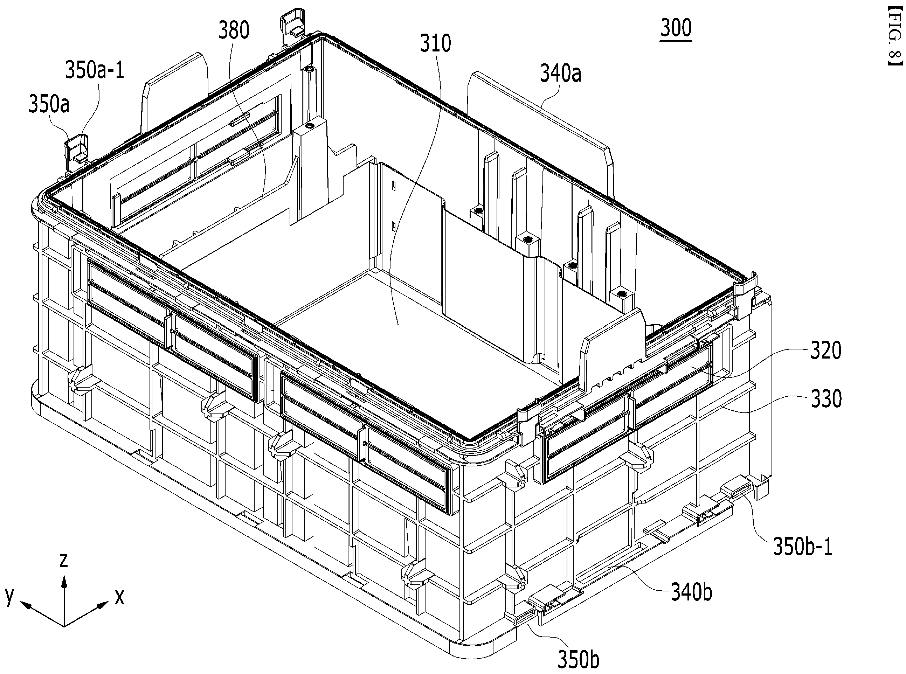

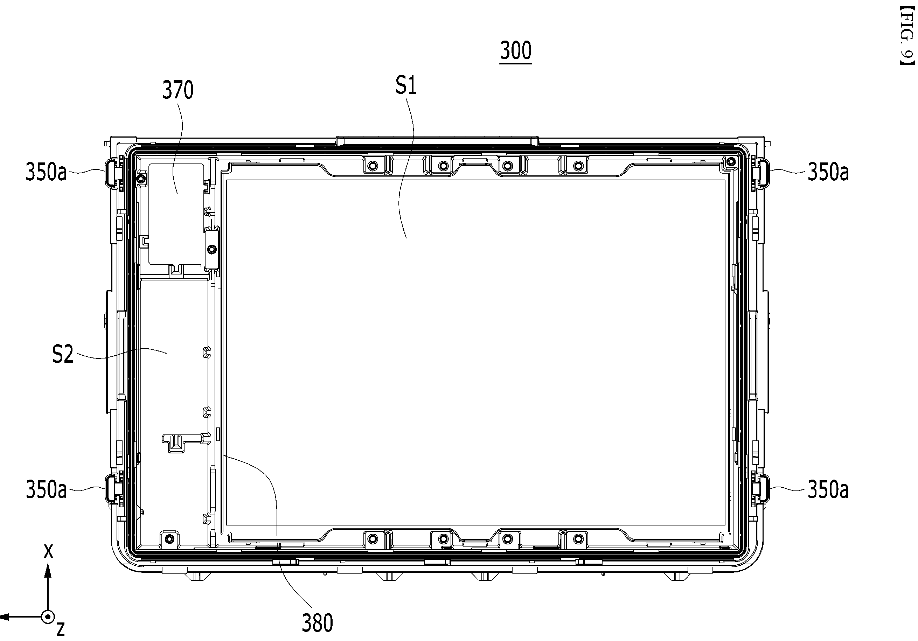

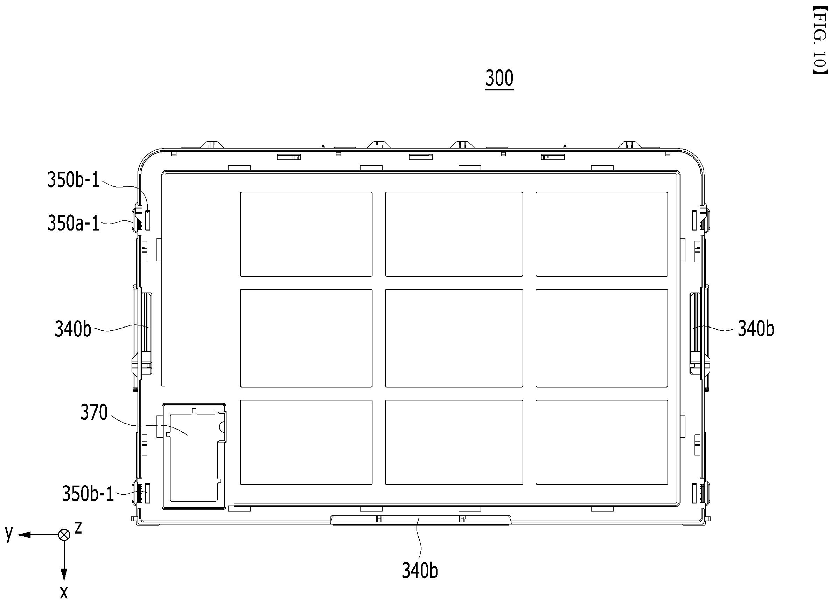

FIG. 8 is a perspective view of a pack case 300 included in the battery pack of FIG. 5. FIG. 9 is a top view of the pack case 300 of FIG. 8. FIG. 10 is a bottom view of the pack case 300 of FIG. 8.

Referring to FIG. 8, the pack case 300 may be configured in a box shape. The box-shaped pack case 300 may be integrally molded, or may be manufactured in such a manner that at least one surface is coupled with an adjacent surface.

The pack case 300 includes at least one venting port 320. A filter is installed in the venting port 320. When a thermal event occurs in the battery cell 110 housed inside the pack case 300, it is possible to discharge the venting gas generated from the battery cell 110 through the venting port 320. The venting gas discharged from the venting port 320 may move through the venting flow path formed in the space between the pack case 300 and the outer cover 500 (see FIG. 5), and then be discharged to the outside of the outer cover 500.

At this time, the outer surface of the pack case 300 may be provided with partition walls 330 having a structure that protrudes and extends outward from the outer surface. Due to the partition walls 330, the moving distance of the venting gas in the venting flow passage increases, and the flame contained in the venting gas naturally extinguishes while hitting the partition walls 330. Therefore, the flame contained in the venting gas is not discharged outside the outer cover 500. In addition, the rigidity of the pack case 300 can also be reinforced by the partition walls 330.

The partition walls 330 are formed in at least one direction on the outer surface of the pack case 300. The embodiment of FIG. 8 illustrates a case in which the partition walls 330 are formed in the up and down direction (vertical direction) and in the horizontal direction to intersect, but the present disclosure is not limited thereto, and it is sufficient that the partition walls 330 are formed so as to intersect the movement path of the venting gas.

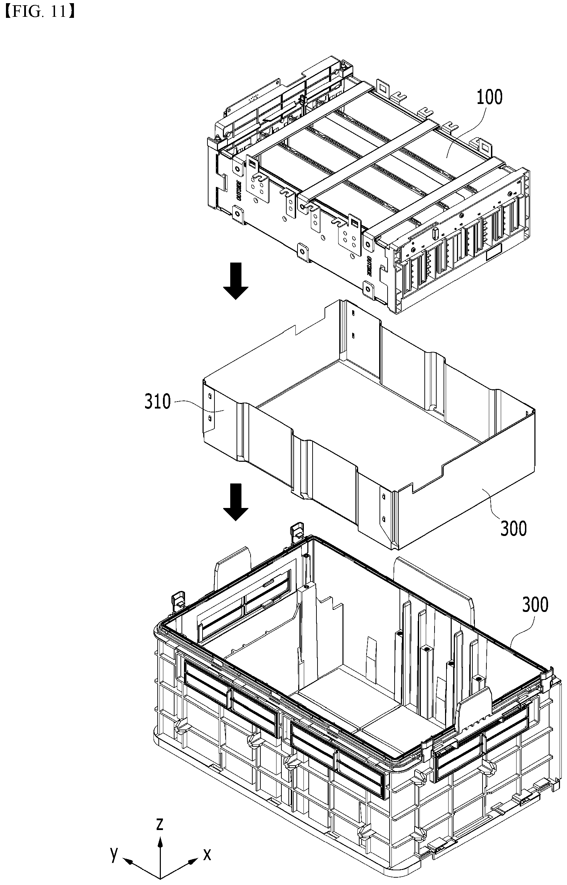

As shown in FIG. 9, there are largely two housing spaces inside the pack case 300 on the basis of the compartment wall 380. One is a space S1 in which the cell module assembly 100 is housed, and the other is a space S2 in which an electrical connection unit 600, which is an electrical component of the battery pack, is housed. Housing of the cell module assembly 100 will be described later with reference to FIG. 11.

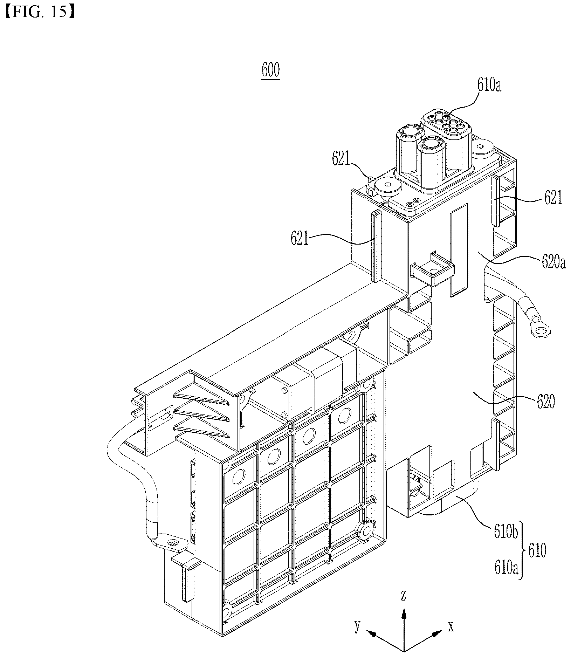

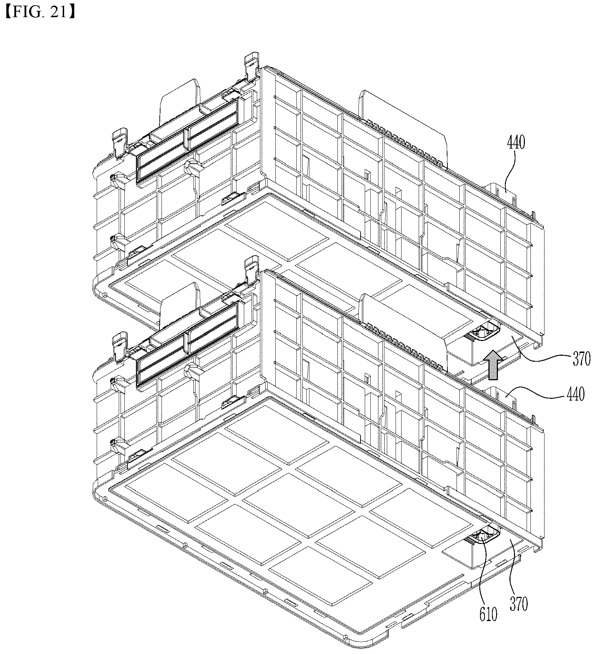

First, as shown in FIGS. 9 and 10, the space S2 on the bottom surface of the pack case 300 includes a connector through-hole portion 370 into which the connector 610 (see FIGS. 15 to 21) of the battery pack stacked on the lower part can be inserted for electrically connecting between the battery packs stacked one above the other, as will be described later. Thereby, as will be described in detail later with reference to FIG. 21, when a plurality of battery packs are stacked one above the other, the connector 610 of the corresponding battery pack and the connector 610 of the battery pack stacked on the lower part are connected to each other. Similarly, the connector 610 of the battery pack is connected to the connector 610 of the battery pack stacked on the upper part in the same manner. The connector 610 is electrically connected between the battery packs stacked one above the other and between the battery packs and a battery management system (BMS).

Referring to FIG. 11, housing of the cell module assembly 100 into the pack case 300 will be described. FIG. 11 is a diagram illustrating a case where the cell module assembly 100 of FIG. 8 is housed in the housing space S1 of the cell module assembly 100 of the pack case 300. As shown in FIG. 11, the cell module assembly 100 shown in FIG. 6 may be housed in the internal space of an auxiliary case 310, and then be mounted on the pack case 300. The cell module assembly 100 is primarily housed in the internal space of the auxiliary case 310, and then finally housed in the pack case 300, thereby supplementing the rigidity of the cell module assembly 100 and preventing the alignment of the stack of the plurality of battery cells 110 at the cell module assembly 100 from being disturbed. The auxiliary case 310 may be made of metal, stainless steel, or the like by way of example.

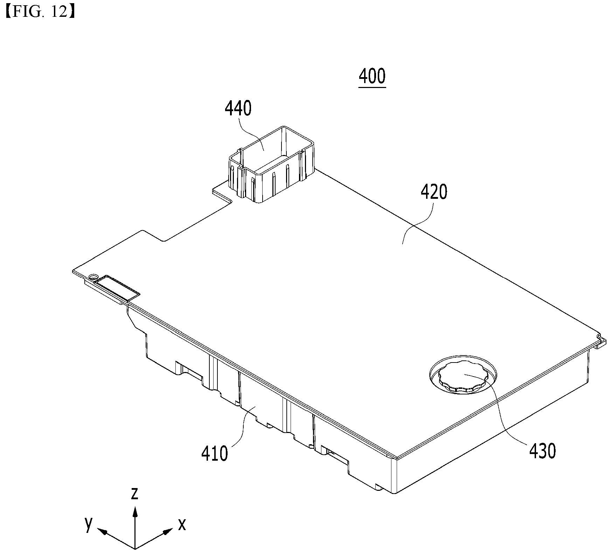

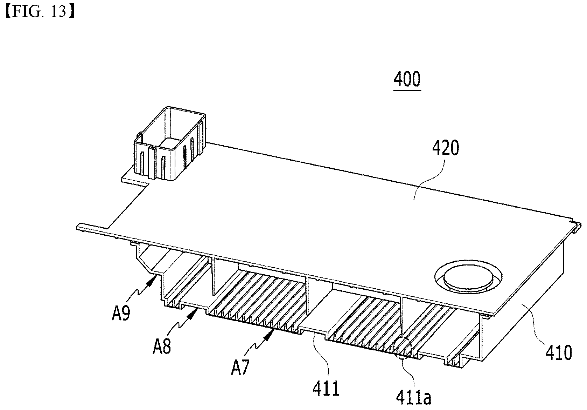

FIG. 12 is a perspective view of a fire extinguishing tank 400 included in the battery pack of FIG. 5. FIG. 13 is a perspective cross-sectional view of the fire extinguishing tank 400 of FIG. 12, and shows a cross section taken along line A5-A5' of FIG. 5. As described above in FIG. 1, the fire extinguishing tank 400 includes a lower tank 410 and an upper cover 420. The lower tank 410 and the upper cover 420 may be manufactured separately and seal bonded together, or may be manufactured integrally. The upper cover 420 may further include an injection port 430 capable of injecting a fire extinguishing agent. The injection port 430 can be closed with a stopper to seal the fire extinguishing tank 400.

The portion formed thinly in the base plate 411 of the lower tank 410 may function as a fragile portion 411a. That is, when a thermal event occurs in the battery cell 110 of the cell module assembly 100, the fragile portion 411a having a relatively thin thickness may be damaged first. When the fragile portion 411a is damaged and an opening is formed in the base plate 411, the fire extinguishing agent held inside the fire extinguishing tank 400 may be discharged to the cell module assembly 100 side via the fragile portion 411a.

The fragile portion 411a may be provided in a plurality of numbers. For example, the fragile portion 411a may have a shape narrow in width and long in length. That is, the fragile portion may have a linear shape, and may have a straight-line shape arranged in parallel with one edge of the fire extinguishing tank 400, and each fragile portion 411a may be arranged in parallel with one another.

Meanwhile, according to the embodiment of FIG. 12, the longitudinal direction of the battery cell 110 (e.g., the Y-axis direction in the figure) and the longitudinal direction of the fragile portion 411a (e.g., the X-axis direction in the figure) may be orthogonal to each other. That is, a plurality of fragile portions 411a are arranged to intersect with the longitudinal direction of the battery cell 110. Accordingly, the fire extinguishing agent can be supplied all together through the plurality of opened fragile portions 411a via the battery cell 110 along the longitudinal direction of the battery cell 110 where a thermal event has occurred, and the battery cell 110 in which a thermal event has occurred can be extinguished more efficiently and quickly.

Further, referring to FIG. 13, the base plate 411 of the lower tank 410 has a step. More specifically, the base plate 411 is largely divided as follows. The base plate consists of a portion A7 where the fragile portion 411a is located, a portion A8 in contact with the strap 140 of the cell module assembly 100, and a portion A9 located on the electrical connection unit 600 side. Among these, the height of the base plate 411 at the portion A7 where the fragile portion 411a is located is the lowest.

By ensuring that the fragile portion 411a of the lower tank 410 is arranged closest to the battery cell 110 as possible, when overheating or ignition occurs in some of the battery cells 110, rapid initial suppression is performed to more effectively prevent the occurrence of a dangerous situation such as secondary explosions due to transfer of heat or flame to adjacent battery cells 110.

In more detail, as shown in FIG. 6 regarding the cell module assembly 100, the height of the cell module assembly 100 is not constant due to the portion where the strap 140 is located, the portion where the busbar housing 130 is located (the connector 610, fuses, etc. are located outside the busbar housing 130), and the like. Regardless of this, if the height of the base plate 411 of the lower tank 410 of the fire extinguishing tank 400 is constant as a whole, a relatively empty space is created between the base plate 411 of the fire extinguishing tank 400 and the upper surface of the cell module assembly 100. In such a case, heat transfer from the battery cell 110 whose temperature has risen to the fragile portion 411a is impeded due to the empty space, whereby fire extinguishment is delayed accordingly.

When the battery cell 110 overheats, the fragile portion 411a is arranged immediately adjacent to the battery cell 110 whose temperature has risen, so that the fragile portion 411a is immediately damaged, and the battery cell 110 can be quickly cooled and extinguished.

In summary, the lower surface of the base plate 411 of the fire extinguishing tank 400 and the upper surface of the cell module assembly 100 have shapes that generally match each other. Accordingly, since the fire extinguishing tank 400 is arranged in closer contact with the cell module assembly 100, the battery cell 110 whose temperature has risen can be more effectively cooled, and a fire extinguishing agent can be injected more quickly into the battery cell 110 where overheating or ignition has occurred. Further, more extinguishing agent can be efficiently housed in the fire extinguishing tank 400. That is, if the height of the base plate 411 of the lower tank 410 of the fire extinguishing tank 400 is constant as a whole, the fire extinguishing tank 400 houses less fire extinguishing agent due to the corresponding empty space.

The fire extinguishing agent provided in the fire extinguishing tank 400 may be, for example, in the form of fire extinguishing liquid. Redundant description will be omitted and reference will be made to those described above.

Further, the fire extinguishing tank 400 includes a connector through-hole portion 440. This will be described in detail later with reference to FIGS. 15 to 21.

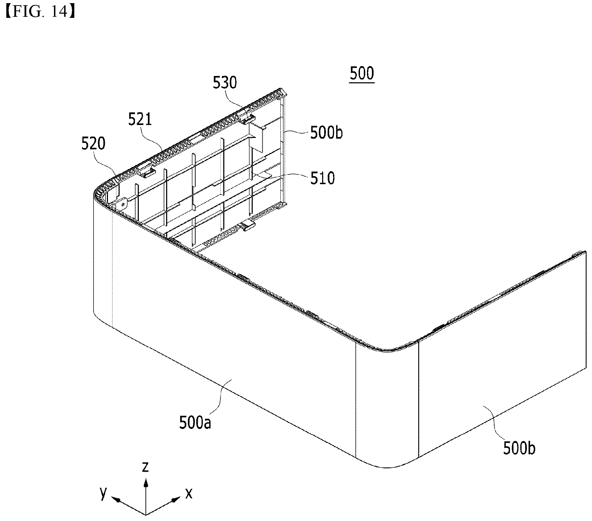

FIG. 14 is a perspective view of the outer cover 500 included in the battery pack of FIG. 5.

The outer cover 500 is coupled to the pack case 300 and covers at least one surface of the pack case 300. FIGS. 5 and 14 show a case where the front surface and both side surfaces of the pack case 300 are covered. The front cover 500a of the outer cover 500 covers the front surface of the pack case 300, and a pair of side covers 500b of the outer cover 500 cover both side surfaces of the pack case 300.

In the pack case 300 of FIG. 8, the venting ports 320 are provided on the front surface and both side surfaces of the pack case 300, respectively. Accordingly, the outer cover 500 is also provided so as to cover the front surface and both side surfaces of the pack case 300.

Meanwhile, the present disclosure is not limited to those described above, and it is sufficient that the outer cover 500 can cover the venting port 320. For example, various modifications and changes are possible, such as being able to cover all four surfaces of the front, back, and both side surfaces of the pack case 300, and being able to cover only a portion of the four side surfaces excluding the upper and lower surfaces of the pack case 300.

The front cover 500a and the pair of side covers 500b of the outer cover 500 may be formed integrally, but may also be manufactured separately and coupled to each other.

The outer cover 500 covers the venting port 320 of the pack case 300 at a position spaced away from the venting port 320 by a prescribed distance. This prevents the battery cells 110 inside the pack case 300 from being directly exposed to the outside through the venting port 320.

Referring to FIG. 14, the upper and lower sides of the outer cover 500 each include eaves 520 that protrude and extend from the main body of the outer cover 500 in the direction of the pack case 300. By further including the eaves 520, the function of covering the venting port 320 can be further strengthened. The eaves 520 may have a width comparable to the space between the outer cover 500 and the pack case 300, or may have a width smaller than that.

Further, the outer cover 500 is coupled to the outer surface of the pack case 300 while being separated at a prescribed distance, whereby as described above, the venting gas discharged from the venting port 320 of the pack case 300 may move through a venting flow path formed in a space between the pack case 300 and the outer cover 500, and then be discharged to the outside of the outer cover 500.

The eaves 520 are provided with a plurality of venting holes 521 arranged in a row along the eaves 520. The venting gas that has moved through the venting flow path formed in a space between the pack case 300 and the outer cover 500 can be discharged through the venting hole 521 of the outer cover 500.

Meanwhile, the main body of the outer cover 500 may also comprise the partition walls 510 formed in at least one direction on the surface facing the pack case 300. Due to the partition wall 510, the moving distance of the venting gas in the venting flow path increases, and the flame contained in the venting gas is naturally extinguished while hitting the partition walls 510. Therefore, the flame contained in the venting gas is not discharged to the outside of the outer cover 500.

The partition walls 510 are formed in at least one direction on the outer surface of the outer cover 500. The embodiment of FIG. 9 illustrates a case in which the partition walls 510 are formed in the up and down direction (vertical direction) and in the horizontal direction to intersect, but the present disclosure is not limited thereto, and it is sufficient that the partition walls 510 are formed to intersect the movement path of the venting gas.

On the other hand, the rigidity of the outer cover 500 can also be reinforced by the partition wall 510.

Further, by covering the outer surface of the pack case 300 with the outer cover 500, an aesthetic function may be imparted to the appearance of the battery pack.

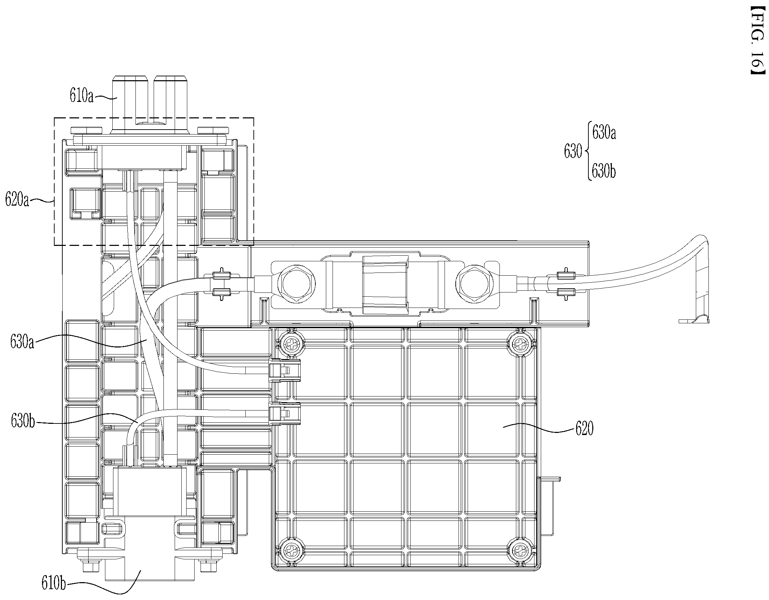

FIG. 15 is a perspective view of the electrical connection unit 600, which is a component for electrically connecting the battery pack. FIG. 16 is a rear view of the electrical connection unit of FIG. 15.

The electrical connection unit 600 includes other components such as a connector 610 that performs an electrical connection function between battery packs stacked one above the other and between the battery packs and a battery management system (BMS), a connector housing 620, various cables 630, and fuses. The electrical connection unit 600 is housed in a housing space S2 (see FIG. 9) inside the pack case 300, and arranged on the front surface of the cell module assembly 100. A partition plate is provided inside the pack case 300, and the internal space is comparted based on this, so that the electrical connection unit 600 and the cell module assembly 100 can each be housed.

The connector 610 performs not only an electrical connection function between the battery pack and a battery management system (BMS) but also an electrical connection function between the battery packs stacked one above the other as will be described later. The connector 610 is connected to a power cable 630a to transmit electric power. Further, the connector 610 is connected to the signal cable 630b to transmit signals for monitoring and managing the battery pack.

The connector 610 includes an upper connector 610a for electrically connecting to the battery pack stacked on the upper part, and a lower connector 610b for electrically connecting to the battery packs stacked on the lower part. For example, the upper connector 610a is a male (protruding shape) connector, and the lower connector 610b may be made from a corresponding female type (concave-shaped) connector. For each battery pack, a cable 630 or other electrically conductive structure is connected between the upper connector 610a located on the upper part and the lower connector 610b located at the lower part, and the corresponding cable 630 or electrically conductive structure is housed in the connector housing 620.

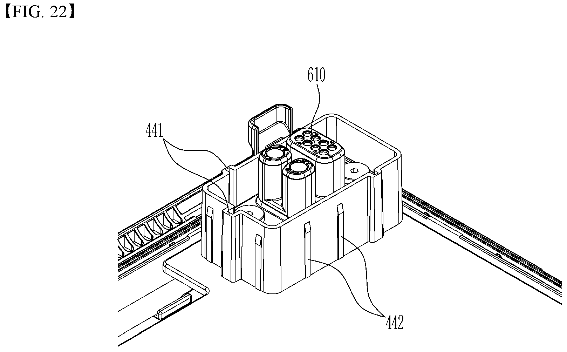

The connector housing 620 is provided with a connector 610, and provided with various cables 630, and other components such as fuses. A more specific structure and shape of the connector housing 620 will be described later with reference to FIG. 22.

The cable 630 includes a power cable 630a that transmits electric power between the battery pack and the battery management system (BMS), and a signal cable 630b that transmits signals for monitoring and managing the battery pack.

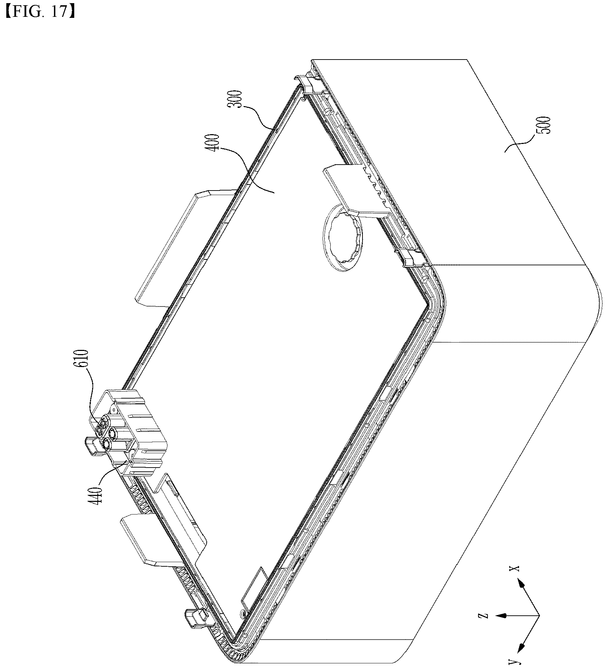

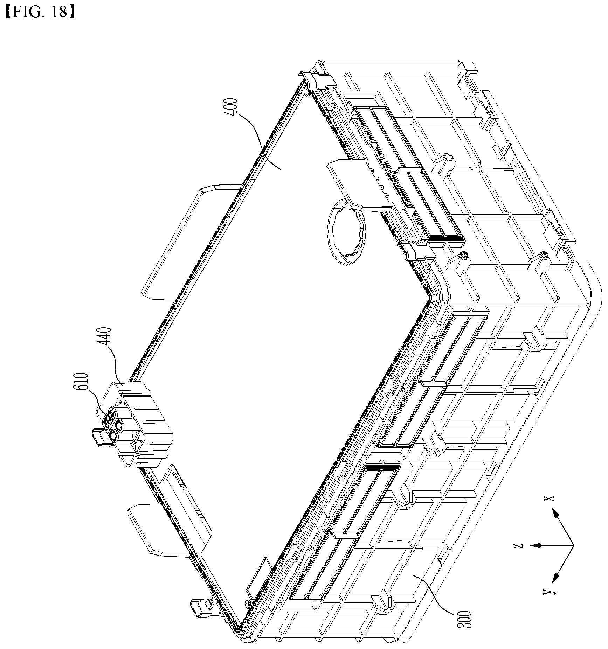

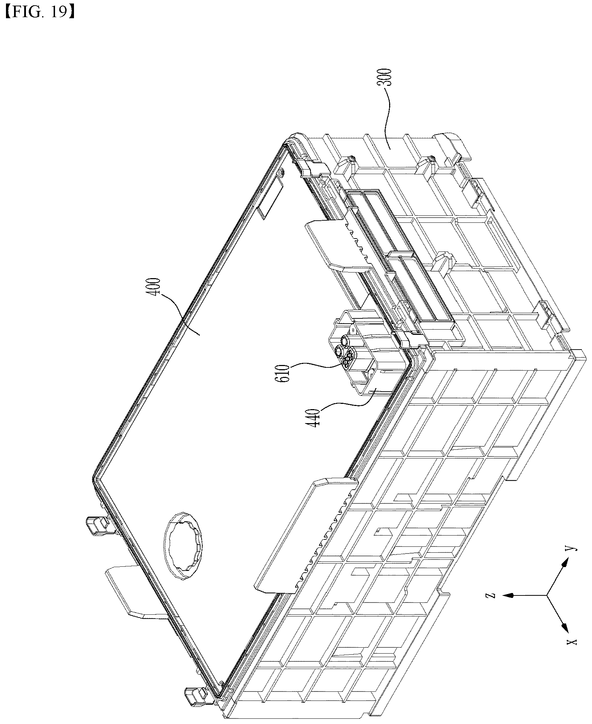

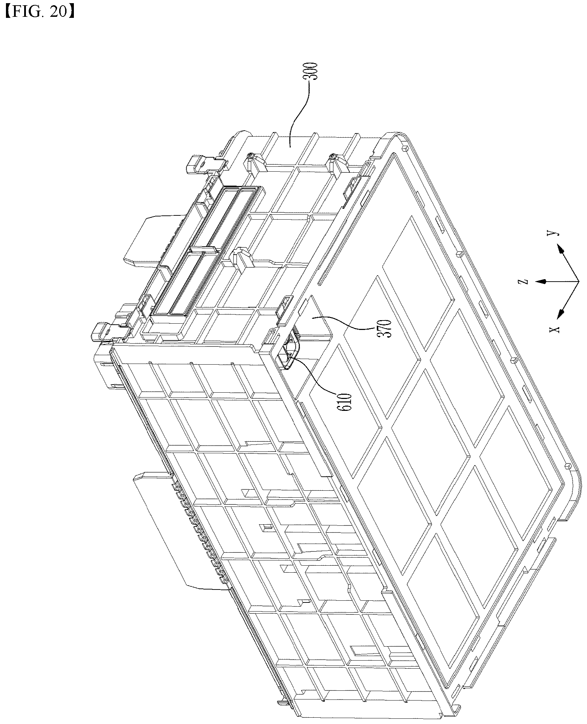

FIG. 17 is a perspective view of a battery pack in which all the constituent elements of the above-mentioned battery pack are coupled with each other with reference to FIGS. 5 to 15. FIG. 18 is a perspective view of a state in which the outer cover is removed from the battery pack of FIG. 17. FIG. 19 is a perspective view of FIG. 18 rotated by 180 degrees. FIG. 20 is a bottom perspective view of FIG. 19. FIG. 21 shows a case where the battery packs of FIG. 19 are provided in a plurality of numbers and stacked in the up and down direction.

Referring to FIG. 17, the upper connector 610a of the electrical connection unit 600 passes through the connector through-hole portion 440 of the fire extinguishing tank 400 and is arranged within the connector through-hole portion 440. The upper connector 610a is arranged toward the upper opening surface of the connector through-hole portion 440 so as to be electrically connected to the battery pack stacked on the upper part. The upper connector 610a is exposed when viewed from the upper opening surface of the connector through-hole portion 440 (when viewed from the upper surface). At this time, the upper connector 610a protrudes above the uppermost surface of the fire extinguishing tank 400. In more detail, the connector through-hole portion 440 has a shape that protrudes upward from the upper surface of the fire extinguishing tank 400, thereby surrounding the side surface of the upper connector 610a that projects from the uppermost surface of the fire extinguishing tank 400.

The connector through-hole portion 440 penetrates the fire extinguishing tank 400 in the up and down direction. More specifically, the connector through-hole portion 440 penetrates the upper cover 420 (see FIG. 12) of the fire extinguishing tank 400. The upper cover 420 of the fire extinguishing tank 400 covers both the upper surface of the housing space S1 of the cell module assembly 100 and the upper surface of the housing space S2 of the electrical connection unit 600 described above in FIG. 9, but the lower tank 410 (see FIG. 12) of the fire extinguishing tank 400 is located on the upper surface of the housing space S1 of the cell module assembly 100. Although not shown in FIG. 12 as a modification, it may penetrate from the base plate 411 of the lower tank 410 to the uppermost surface of the upper cover 420. In any case, of course, the connector through-hole portion 440 also forms the outer surface of the fire extinguishing tank 400 so that the fire extinguishing agent does not leak out to the outside through the connector through-hole portion 440.

For example, the connector through-hole portion 440 of the fire extinguishing tank 400 may have a generally rectangular cross section, and may have a tubular shape that that protrudes upward from the upper surface of the fire extinguishing tank 400. The connector through-hole portion 370 of the pack case 300 may have a rectangular opening shape by way of example. The dimensions (horizontal and vertical lengths) of the connector through-hole portion 440 of the fire extinguishing tank 400 are equal to or smaller than the dimensions (horizontal and vertical length) of the connector through-hole portion 370 of the pack case 300. However, the present disclosure is not limited to those illustrated, and the structure and cross-sectional shape of the connector through-hole portion 440 of the fire extinguishing tank 400 and the connector through-hole portion 370 of the pack case 300 are variously modified and changed to match with the specifications of the battery pack to which the present invention is applied.

Referring to FIG. 20, the lower connector 610b is arranged toward the connector through-hole portion 370 of the pack case 300 so as to be electrically connected to the battery pack stacked on the lower part. The lower connector 610b is located near the connector through-hole portion 370 of the pack case 300, and when viewed from the connector through-hole portion 370 of the pack case 300 (when viewed from the lower surface), the lower connector 610b is exposed.

As shown in FIG. 21, when a plurality of battery packs are stacked one above the other, the upper connector 610a exposed upwardly through the connector through-hole portion 440 of the fire extinguishing tank 400 is electrically connected to the lower connector 610b of the battery pack stacked on the upper part. That is, even if the fire extinguishing tank 400 covers the upper part of the pack case 300, interconnection between the connectors 610 between the stacked battery packs is made possible via the connector through-hole portion 440. The upper connector 610a of the battery pack stacked on the lower part may be fitted into the lower connector 610b of the battery pack stacked on the upper part.

When viewing the battery pack from above (or when viewing from below), the connector through-hole portion 440 of the fire extinguishing tank 400 is provided at a position corresponding to the connector through-hole portion 370 of the pack case 300 in a row. That is, the connector through-hole portion 440 of the fire extinguishing tank 400 and the connector through-hole portion 370 of the pack case 300 are provided at positions aligned with each other in the up and down direction of the battery pack. Therefore, as shown in FIG. 21, when a plurality of battery packs are stacked one above the other, the connector through-hole portion 370 of the pack case 300 of the battery pack stacked on the upper part and the connector through-hole portion 440 of the fire extinguishing tank 400 of the battery pack stacked on the lower part correspond to each other (that is, the opened portions are connected to each other).

Accordingly, as shown in FIG. 21, the connector through-hole portion 440 in a protruded shape is inserted into the connector through-hole portion 370 of the pack case 300 of the battery pack located on the upper layer. Accordingly, the alignment of the battery packs stacked one above the other are prevented from being disturbed, so that the electrical connection between the connectors 610 of the battery packs stacked one above the other is not broken, and can be firmly connected to each other.

Referring again to FIG. 15, the upper surface of the connector housing 620 includes a protrusion portion 620a at a portion where the upper connector 610a is located. The protrusion portion 620a of the connector housing 620 may be formed integrally with the connector housing 620. The upper connector 610a is located on the protrusion portion 620a of the connector housing 620. The protrusion portion 620a of the connector housing 620 and the upper connector 610a are arranged together in the connector through-hole portion 440 of the fire extinguishing tank 400. The lower connector 610b is located on the lower surface of the connector housing 620.

Meanwhile, the protrusion portion 620a of the connector housing 620 further includes a rib 621. The ribs 621 have a shape extending in the vertical direction. The related contents are explained together with FIG. 22.

FIG. 22 is a partial enlarged view of FIG. 17. Referring to FIG. 22, the connector through-hole portion 440 of the fire extinguishing tank 400 further includes a rib housing portion 441 that protrudes outward from the outer surface of the connector through-hole portion 440. The rib housing portion 441 of the connector through-hole portion 440 of the fire extinguishing tank 400 is located so as to correspond to the rib 621 of the protrusion portion 620a of the connector housing 620.
Similar to the rib 621, the rib housing portion 441 has a shape extending in the vertical direction.

When the protrusion portion 620a and the upper connector 610a of the connector housing 620 enter the connector through-hole portion 440, the rib 621 of the connector housing 620 is fitted into the rib housing portion 441 of the connector through-hole portion 440 of the fire extinguishing tank 400. Accordingly, the connector 610 and the connector housing 620 can be fixed without shaking within the connector through-hole portion 440 of the fire extinguishing tank. Such pairs of ribs 621 and rib housing portions 441 may be provided in a plurality of numbers.

The connector through-hole portion 440 may further include a guide member 442 protruding outward from the outer surface. The guide member 442 also has a shape that extends in the up and down direction, but its upper end has a chamfered shape. When the connector through-hole portion 440 of the battery pack stacked on the lower part enters the connector through-hole portion 370 of the battery pack stacked on the upper part, by sliding along the guide member 442 having a chamfered upper end, stacking of battery packs is facilitated. A plurality of such guide members 442 may be provided.

As shown in FIG. 21, when a plurality of battery packs are stacked in the up and down direction, the connector through-hole portion 440 of the fire extinguishing tank 400 of the battery pack stacked on the lower part passes through the connector hole 370 of the pack case 300 of the battery pack stacked on the upper part. Accordingly, the connector 610 of the battery pack stacked on the upper part and the connector 610 of the battery pack stacked on the lower part can be connected to each other.

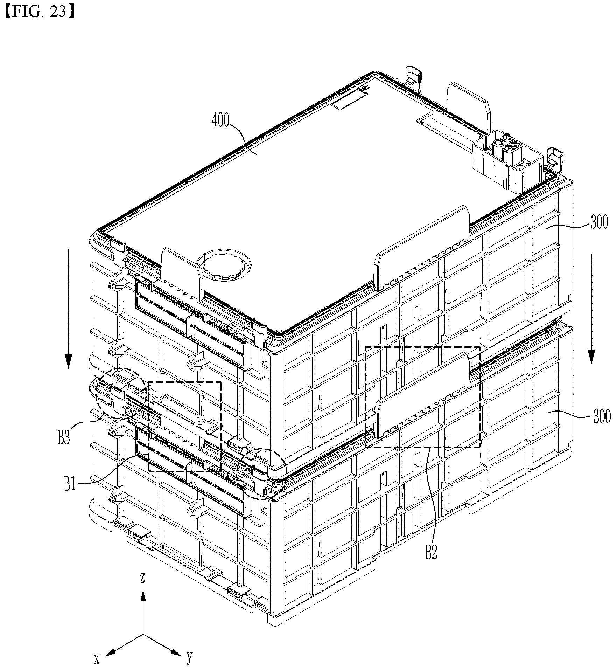

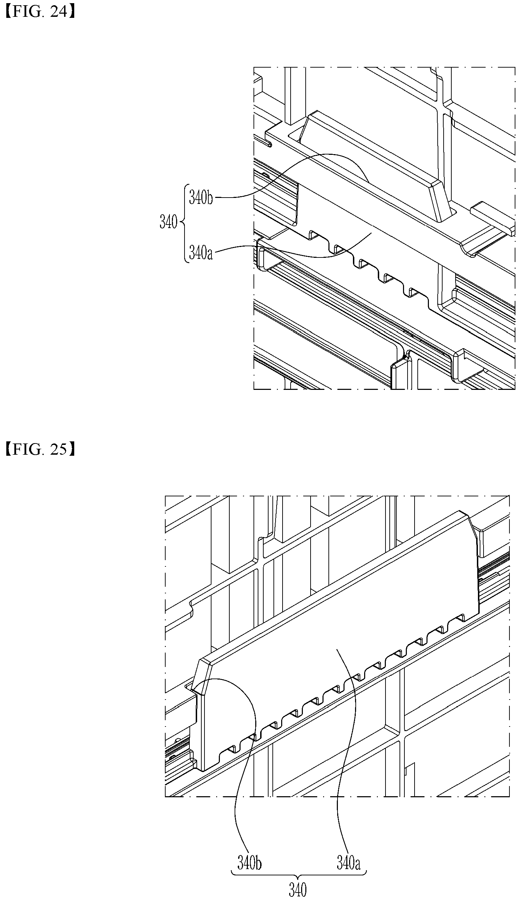

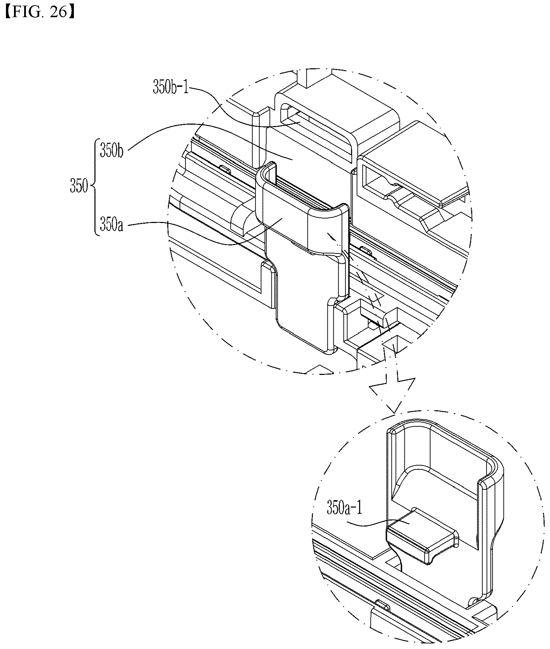

FIG. 23 is a view of the battery pack of FIG. 19 viewed from another angle. When a plurality of battery packs are provided and stacked in the up and down direction, the guide structure and fastening structure when stacking between pack cases is illustrated. FIGS. 24 and 25 are partial enlarged views of the guide member of the pack case of FIG. 23, respectively. FIG. 26 is a partial enlarged view of the fastening member of the pack case of FIG. 23.

First, referring to FIGS. 23 to 25, the pack case 300 includes at least one guide member 340. The guide member 340 facilitates stacking between adjacent battery packs when a plurality of battery packs are stacked in the up and down direction, and also aligns adjacent battery packs (battery packs stacked one above the other) to prevent the alignment from being disturbed.

The guide member 340 includes a first guide member 340a and a second guide member 340b. The first guide member 340a may be arranged at the upper end of the pack case 300, and the second guide member 340b may be arranged at the lower end of the pack case 300. Accordingly, when a plurality of battery packs are stacked in the up and down direction, the stacking is facilitated and bonding between the stacked battery packs is strengthened.

The first guide member 340a is a (guide member, and may have a plate shape that protrudes upward from the upper end of the pack case 300. Further, the male first guide member 340a may, for example, have a rectangular shape as a whole, but both corners of the upper end part may be chamfered, thereby facilitating stacking of the battery packs. That is, since each battery pack contains a plurality of battery cells, the battery pack has a considerable amount of weight. Since the male first guide member 340a has a chamfered shape, it is easier to stack the battery packs vertically.

Further, the male first guide member 340a has a protruding plate shape, and is coupled to a second guide member 340b, which is a female guide member of the battery pack stacked on the inner surface of the plate-shaped first guide member 340a, and then, the outer surface of the battery pack stacked on the upper part can be contacted. Thereby, the first guide member 340a can support the outer surface of the battery pack stacked on the upper part, and can prevent the alignment of the stacked battery packs from being disturbed.

The female second guide member 340b may have an opening shape through which the male first guide member 340a passes, as shown in FIG. 24. Alternatively, it may have a notch shape as shown in FIG. 25. At this time, the male first guide member 340a is fitted into the notchshaped female second guide member 340b. Alternatively, it may be a concave shape (not shown) that entirely surrounds the male first guide member 340a. The male first guide member 340a of the pack cases 300 stacked on the lower part is coupled to the female second guide member 340b of the pack cases 300 stacked on the upper part.

The respective dimensions (widths) of the male first guide member 340a and the female second guide member 340b may be smaller than the dimension (width) of one side surface of the pack case 300 on which the male first guide member 340a and the female second guide member 340b are provided.

A set of male first guide members 340a and female second guide members 340b may be provided on at least one of the front and rear surfaces of the pack case 300. Alternatively, a set of male first guide members 340a and female second guide members 340b may be provided on both sides of the pack case 300.

Further, referring to FIGS. 23 and 26, the pack case 300 includes at least one fastening member 350. When a plurality of battery packs are stacked in an up and down direction, the fastening member 350 strengthens the fastening between the stacked battery packs.

The fastening member 350 includes a first fastening member 350a and a second fastening member 350b. The first fastening member 350a may be arranged on the upper side of the pack case 300, and the second fastening member 350b may be arranged on the lower side of the pack case 300. Thereby, the first fastening member 350a of the battery pack stacked on the lower part and the second fastening member 350b of the battery pack stacked on the upper part are fastened to each other, thereby strengthening the fastening between the battery packs stacked one above the other.

FIG. 26 shows an example of the fastening member 350. The first fastening member 350a is a male fastening member, and includes a protrusion portion having a shape that protrudes from the outer surface of the pack case 300, and the second fastening member 350b is a female fastening member and has a notch shape. That is, the male first fastening member 350a in a protruded shape is inserted into the second fastening member 350b, which is a female fastening member in a notch shape, and are coupled to each other in a shape that fits perfectly. However, the present disclosure is not limited to those illustrated, and various modifications and changes are possible, for example, the female second fastening member 350b may be manufactured in the shape of an opening through which the male first fastening member 350a passes or a concave shape that wraps around the protruded portion of the male first fastening member 350a.

In addition, the end of the male first fastening member 350a further includes a locking stop 350a-1, and the female second fastening member 350b further includes a locking hook 350b-1. Thus, the locking stop 350a-1 of the male first fastening member 350a may be hooked and coupled with the locking hook 350b-1 of the female second fastening member 350b. The picture on the right of FIG. 26 is a picture in which the male first fastening member 350a of the picture on the left is rotated 180 degrees, and illustrates the locking stop 350a-1.

The present disclosure is not limited thereto, and various modifications and changes are possible. In another example, the first fastening member 350a and the second fastening member 350b are each formed in an annular shape, and the annular first fastening member 350a and the annular second fastening member 350b may be engaged and fastened to each other.

Meanwhile, in the embodiment of FIG. 23, a case is shown in which a total of four fastening members 350 are provided, two on each side of the pack case 300, and the first fastening member 350a is coupled to the second fastening member 350b. The present disclosure is not limited to those illustrated with respect to the method in which the fastening member 350 is coupled, and may be realized by modifying or changing the method in various ways.

In addition, for the portions where the description regarding the battery pack in FIGS. 5 to 26 overlaps with the description regarding the battery pack in FIGS. 1 to 4, reference is made to those described above with reference to FIGS. 1 to 4.

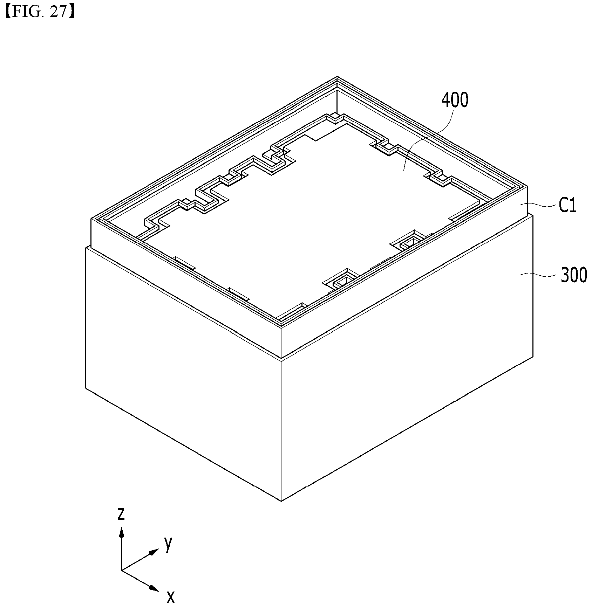

As described above, the pack case 300 may be provided in a plurality of numbers, and be configured so as to be stacked in the up and down direction. The function of the stacked battery pack will be described in more detail with reference to FIGS. 27 to 29.

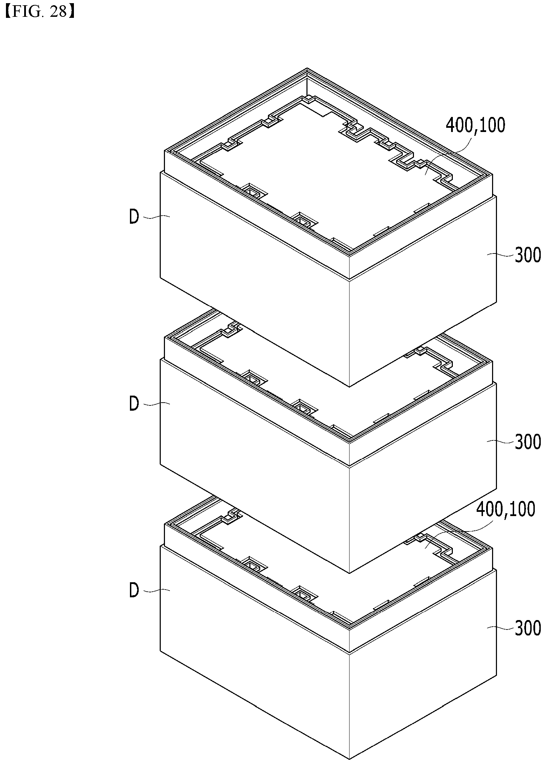

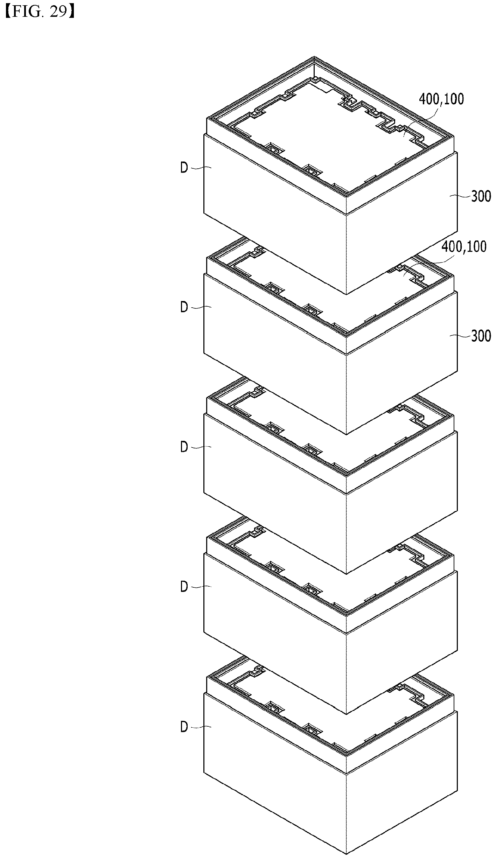

FIG. 27 is a perspective view schematically showing at least a partial configuration of the battery pack of FIGS. 1 to 17 according to the present disclosure. Further, FIGS. 28 and 29 are diagrams showing an embodiment in which the pack cases shown in FIG. 27 are stacked in a plurality of numbers. FIGS. 27 to 29 schematically show the battery pack for convenience of understanding. For detailed configuration of the battery pack, refer to the details described above in FIGS. 1 to 26.

First, referring to FIG. 27, the pack case 300 may include a bottom portion and a side wall portion. The cell module assembly 100 can be housed in the internal space of the pack case 300, and the upper surface of the cell module assembly 100 can be covered with the fire extinguishing tank 400, thereby constituting a battery pack. For reference, in FIG. 27, the height of the upper side of the pack case 300 is shown to be greater than the height of the upper surface of the fire extinguishing tank 400. However, FIG. 27 is a schematic diagram and is only an example, and the present disclosure is not limited to those shown in FIG. 27. That is, on the contrary, the height of the upper surface of the fire extinguishing tank 400 may be greater than the height of the upper side of the pack case 300, and the height of the upper surface of the fire extinguishing tank 400 and the height of the upper side of the pack case 300 may be equal. Thus, various modifications are possible.

The pack cases 300 as shown in FIG. 27 may be provided in a plurality of numbers to form a stacked structure of battery packs as shown in FIG. 28 or FIG. 29. At this time, the battery pack in FIG. 27 may be one unit pack. And, such unit packs are provided in a plurality of numbers, so that an entire battery pack can be constructed in a module-stacked manner as shown in FIG. 28 or FIG. 29.

More specifically, for example, the configuration of FIG. 28 illustrates that three unit packs D are stacked in the up and down direction. And, the configuration of FIG. 29 illustrates that five unit packs D are stacked in the up and down direction. The present disclosure is not limited to those illustrated, and the number of unit packs D can be variously changed to match with the environment in which the present disclosure is implemented.

For example, if the present disclosure is realized by a battery pack as an energy storage system (ESS), the number of unit battery packs can be adjusted, so that the voltage band and/or storage capacity of the energy storage device can be realized to match with the relevant environment. According to such an embodiment configuration of the disclosure, by stacking one unit pack with a common structure in various ways, it is possible to comply with products with various voltage bands depending on the number of stacking. For example, by adjusting the number of stacking of the same unit pack, it may be possible to realize both a low-pressure band product as shown in FIG. 28 and a high-pressure band product as shown in FIG. 29. Therefore, compared to products limited only to specifications of a specific voltage band, economic efficiency and compatibility can be improved. Further, according to such an embodiment configuration, products with various storage capacities can also be realized depending on the number of stacking.

In other words, when stacked unit packs are connected in series, products with various voltage bands can be realized depending on the number of stacking. Further, when stacked unit packs are connected in parallel, products with various capacities (storage capacity) can be realized depending on the number of stacking.

In particular, each unit pack D may include a cell module assembly 100 therein. Further, each unit pack D includes a connector 610 so that each cell module assembly 100 can be electrically connected to each other during stacking as described above. In particular, such connectors 610 may be configured to be coupled to each other due to the vertical stacking of each unit pack D.

Moreover, in the above-mentioned embodiment configuration, each unit pack D may house a fire extinguishing tank 400 along with a cell module assembly 100. That is, each unit pack D includes a fire extinguishing tank 400 at the upper part of the cell module assembly 100, as described above. The battery packs stacked in a plurality of numbers have a stacked structure of fire extinguishing tank 400 - cell module assembly 100 - fire extinguishing tank 400 - cell module assembly 100 from top to bottom. The stacked battery pack of the present disclosure having such a structure can form a battery pack by increasing (expanding) the number of cell module assemblies 100 to increase storage capacity, and also can safely provide against a thermal event such as a fire in the cell module assembly 100. Therefore, according to this embodiment configuration of the present disclosure, the safety of the battery pack can be further improved.

Referring again to FIG. 27, another example of a coupling method between battery packs (pack case 300) stacked up and down is as follows. At the upper end of the side wall portion of the pack case 300, there may be a step formed in a concave shape inward, such as a step portion C1 for coupling. For example, the side wall portion of the pack case 300 has a thinner thickness. Further, although not shown in FIG. 27, a coupling recess may be formed in the bottom of the pack case 300 so that the coupling step C1 of the side wall part can be inserted. That is, when the pack case 300 stacks different pack cases 300 in the up and down direction, the coupling step C1 formed on the upper side of the side wall portion of the lower pack case 300 is formed on the upper pack case 300. Accordingly, when the plurality of pack cases 300 are stacked and coupled in the up and down direction, the outer surface of the pack case 300 may have a flat shape as a whole.

On the other hand, the coupling method for the fastening structure between the battery packs stacked one above the other is not limited to those shown in FIG. 27 and/or FIG. 8, and various other coupling methods can be modified or changed and applied to the present disclosure.

Further, the battery packs of the present disclosure can be connected to a battery management system (BMS, not shown). The battery management system monitors and manages the battery pack(s). The battery management system may be located on the uppermost layer of battery packs stacked one above the other. However, the position of the battery management system is not limited to those described above, and can be modified and changed in various ways to match with the method or environment in which the present disclosure is realized.

The battery pack according to the present disclosure may further include various other components included in the battery pack, in addition to the above-mentioned components. For example, the battery pack according to the present disclosure may include various electrical components for controlling or managing the charge and discharge of the battery pack, such as a battery management system (BMS), relays, fuses, and current sensors.

Further, according to the present disclosure, it is possible to facilitate the stacking of a plurality of battery packs and to strengthen the electrical and mechanical connections between the stacked battery packs. In addition, since each of the plurality of stacked battery packs is provided with a fire extinguishing tank, thermal events occurring inside the battery pack can be controlled more quickly and effectively.

Further, the present disclosure is not limited to the above-described embodiments, and can be realized by modifying or changing the above-described embodiments to match with various environments in which the present disclosure is realized, such as by partially modifying the above-described embodiments or by combining the above-mentioned embodiments.

An energy storage system (ESS) according to the present disclosure includes one or more battery packs according to the present disclosure as described above. Further, the energy storage device according to the present disclosure may further include common components included in energy storage devices in addition to the battery pack.

The terms representing directions such as the upper side, the lower side, the left side, and the right side have been used in the present embodiment, but the terms used are provided simply for convenience of description and may become different according to the position of an object, the position of an observer, or the like.

While the present invention has been described in detail with reference to specific embodiments and illustrative drawings, the present invention is not limited thereto, the present invention is defined by the appended claims.

### [Description of Reference Numerals]

- 100:: cell module assembly
- 110:: battery cell
- 120:: end plate
- 130:: busbar housing
- 140:: strap
- 200:: blocking member
- 210:: support plate
- 220:: swelling pad
- 230:: through hole
- 300:: pack case
- 300a:: lower case
- 300b:: upper case
- 310:: auxiliary case
- 320:: venting port
- 330:: partition wall
- 340:: guide member
- 350:: fastening member
- 370:: connector through-hole portion
- 380:: compartment wall
- 400:: fire extinguishing tank
- 410:: lower tank
- 411:: base plate
- 411a:: fragile portion
- 412:: side wall
- 420:: upper cover
- 430:: injection port
- 440:: connector through-hole portion
- 441:: rib housing portion
- 500:: outer cover
- 500a:: front cover
- 510:: partition wall
- 520:: eaves
- 521:: venting hole
- 600:: electrical connection unit
- 610:: connector
- 610a:: upper connector
- 610b:: lower connector
- 620:: connector housing
- 621:: rib
- 630:: cable

## Claims

1. A battery pack comprising:
a cell module assembly (100) including a battery cell stack in which a plurality of battery cells (110) are stacked;
an electrical connection unit (600) including a connector (610) configured for the electrical connection between battery packs stacked in a plurality of numbers;
a pack case (300) that houses the cell module assembly (100) and the electrical connection unit in the inside thereof and is opened at its upper surface; and
wherein the pack case (300) includes a connector through-hole portion (370) in the shape of an opening on a lower surface of the pack case (300) so that the connector (610) can be electrically connected to a battery pack stacked on a lower part; and
**characterized in that** it comprises:
a fire extinguishing tank (400) that covers the upper part of the pack case (300), the fire extinguishing tank (400) holding a fire extinguishing agent in an internal space of the fire extinguishing tank (400),
wherein the fire extinguishing tank (400) includes a connector through-hole portion (440) having an opening on an upper surface of the fire extinguishing tank (400) so that the connector (610) can be electrically connected to a battery pack stacked on an upper part.

2. The battery pack according to claim 1, wherein:
the connector through-hole portion (440) has a tubular shape that protrudes upward from the upper surface of the fire extinguishing tank (400), and
in the battery packs stacked in a plurality of numbers, the connector through-hole portion (440) of the fire extinguishing tank (400) of the battery pack stacked on the lower part is inserted into the connector through-hole portion (370) of the pack case of the battery pack stacked on the upper part.

3. The battery pack according to claim 2, wherein:
the connector through-hole portion (440) of the fire extinguishing tank (400) further includes a guide member (442), wherein the guide member (442) protrudes outward from the outer surface of the connector through-hole portion (440) and extends in the up and down direction, and has structure whose upper part is chamfered, and
in the battery packs stacked in a plurality of numbers, the connector through-hole portion (440) of the fire extinguishing tank (400) of the battery pack stacked on the lower part slides along the guide member (442), and is inserted into the connector through-hole portion (370) of the pack case (300) of the battery pack stacked on the upper part.

4. The battery pack according to claim 1, wherein:
when viewing the battery pack from above or below, the connector through-hole portion (370) of the pack case and the connector through-hole portion (440) of the fire extinguishing tank (400) are provided at positions corresponding to each other in a row.

5. The battery pack according to claim 1, wherein:
the connector (610) includes an upper connector (610a) for electrically connecting with the battery pack stacked on the upper part and a lower connector (610b) for electrically connecting with the battery pack stacked on the lower part, wherein the upper connector (610a) and the lower connector (610b) are electrically connected to each other,
the upper connector (610a) is arranged toward the opened upper surface of the connector through-hole portion (440) of the fire extinguishing tank (400), and
the lower connector (610b) is arranged toward the connector through-hole portion (370) of the pack case (300).

6. The battery pack according to claim 5, wherein:
the electrical connection unit (600) further includes a connector housing (620),
an upper surface of the connector housing (620) includes a protrusion portion (620a), and the upper connector (610a) is provided on the protrusion portion of the connector housing (620),
the upper connector (610a) and the protrusion portion (620a) of the connector housing (620) are arranged within the connector through-hole portion (440) of a tubular shape protruding upward from the upper surface of the fire extinguishing tank (400), and
the lower connector (610b) is provided on the lower surface of the connector housing (620).

7. The battery pack according to claim 6, wherein:
the protrusion portion (620a) of the connector housing (620) further includes a rib (621) extending in a up and down direction,
the connector through-hole portion (440) of the fire extinguishing tank (400) further includes a rib housing portion (441) having a shape that protrudes outward from the outer surface of the connector through-hole portion (440) and extends in the up and down direction, and
the rib (621) is coupled to the rib housing portion (441) such that the connector (610) and the connector housing (620) are fixed within the connector through-hole portion (440).

8. The battery pack according to claim 1, wherein:
the pack case (300) further includes a set of male guide member (340a) and female guide member (340b) so as to facilitate stacking between the plurality of stacked battery packs, and
in the battery packs stacked in a plurality of numbers, a male guide member (340a) of one of the two battery packs adjacent to each other is coupled to a female guide member (340b) of the other of the two battery packs adjacent to each other.

9. The battery pack according to claim 8, wherein:
the male guide member (340a) has a plate shape that protrudes upward from an upper end part of the pack case, and
the female guide member (340b) is provided at a lower end part of the pack case, and has a notch shape, an opening shape, or a concave shape so that the male guide member (340a) can be housed.

10. The battery pack according to claim 8, wherein:
both sides of an upper end part of the male guide member (340a) have a chamfered shape.

11. The battery pack according to claim 8, wherein:
the set of the male guide member (340a) and the female guide member (340b) are provided on at least one of the front surface or the rear surface of the battery pack.

12. The battery pack according to claim 8, wherein:
the set of the male guide member (340a) and the female guide member (340b) are respectively provided on each of both side surfaces of the battery pack facing each other.

13. The battery pack according to claim 1, wherein:
the pack case (300) further includes a set of male fastening member (350a) and female fastening member (350b) so as to be fastened between the plurality of stacked battery packs, and
in the battery packs stacked in a plurality of numbers, a male fastening member (350a) of one of the two battery packs adjacent to each other is coupled to a female fastening member (350b) of the other of the two battery packs adjacent to each other.

14. The battery pack according to claim 13, wherein:
the male fastening member (350a) includes a locking stop (350a-1),
the female fastening member (350b) includes an opening-shaped locking hook (350b-1), and
the locking stop (350a-1) of the male fastening member (350a) is locked and coupled with the locking hook (350b-1) of the female fastening member (350b).

15. The battery pack according to claim 1, wherein:
the plurality of stacked battery packs are stacked in a up and down direction.

16. The battery pack according to claim 1, wherein:
the fire extinguishing agent is a fire extinguishing agent in a liquid state.

17. An energy storage system comprising the battery pack according to claim 1.

## Patentansprüche

1. Batteriepack, umfassend:
eine Zellenmodulbaugruppe (100), die einen Batteriezellenstapel enthält, in dem eine Mehrzahl von Batteriezellen (110) gestapelt ist;
eine elektrische Verbindungseinheit (600), die einen Steckverbinder (610) enthält, der für die elektrische Verbindung zwischen den in einer Mehrzahl gestapelten Batteriepacks konfiguriert ist;
ein Pack-Gehäuse (300), das die Zellenmodulbaugruppe (100) und die elektrische Verbindungseinheit in seinem Inneren aufnimmt und an seiner Oberfläche geöffnet ist; und
wobei das Pack-Gehäuse (300) einen Steckverbinder-Durchgangslochabschnitt (370) in Form einer Öffnung an einer Unterfläche des Pack-Gehäuses (300) aufweist, so dass der Steckverbinder (610) elektrisch mit einem an einem unteren Teil gestapelten Batteriepack verbunden werden kann; und
**dadurch gekennzeichnet, dass** es umfasst:
einen Löschtank (400), der den oberen Teil des Pack-Gehäuses (300) abdeckt, wobei der Löschtank (400) ein Löschmittel in einem Innenraum des Löschtanks (400) enthält,
wobei der Löschtank (400) einen Steckverbinder-Durchgangslochabschnitt (440) mit einer Öffnung an einer Oberfläche des Löschtanks (400) aufweist, so dass der Steckverbinder (610) elektrisch mit einem an einem oberen Teil gestapelten Batteriepack verbunden werden kann.

2. Batteriepack nach Anspruch 1, wobei:
der Steckverbinder-Durchgangslochabschnitt (440) eine rohrförmige Gestalt aufweist, die von der Oberfläche des Löschtanks (400) nach oben ragt, und
bei den in einer Mehrzahl gestapelten Batteriepacks der Steckverbinder-Durchgangslochabschnitt (440) des Löschtanks (400) des am unteren Teil gestapelten Batteriepacks in den Steckverbinder-Durchgangslochabschnitt (370) des Pack-Gehäuses des am oberen Teil gestapelten Batteriepacks eingesetzt ist.

3. Batteriepack nach Anspruch 2, wobei:
der Steckverbinder-Durchgangslochabschnitt (440) des Löschtanks (400) ferner ein Führungselement (442) aufweist, wobei das Führungselement (442) von der Außenfläche des Steckverbinder-Durchgangslochabschnitts (440) nach außen ragt und sich in der Auf- und Abwärtsrichtung erstreckt und eine Struktur aufweist, deren oberer Teil abgefast ist, und
bei den in einer Mehrzahl gestapelten Batteriepacks der Steckverbinder-Durchgangslochabschnitt (440) des Löschtanks (400) des am unteren Teil gestapelten Batteriepacks entlang des Führungselements (442) gleitet und in den Steckverbinder-Durchgangslochabschnitt (370) des Pack-Gehäuses (300) des am oberen Teil gestapelten Batteriepacks eingesetzt ist.

4. Batteriepack nach Anspruch 1, wobei:
bei Betrachtung des Batteriepacks von oben oder unten der Steckverbinder-Durchgangslochabschnitt (370) des Pack-Gehäuses und der Steckverbinder-Durchgangslochabschnitt (440) des Löschtanks (400) an einander entsprechenden Positionen in einer Reihe vorgesehen sind.

5. Batteriepack nach Anspruch 1, wobei:
der Steckverbinder (610) einen oberen Steckverbinder (610a) zur elektrischen Verbindung mit dem am oberen Teil gestapelten Batteriepack und einen unteren Steckverbinder (610b) zur elektrischen Verbindung mit dem am unteren Teil gestapelten Batteriepack aufweist, wobei der obere Steckverbinder (610a) und der untere Steckverbinder (610b) elektrisch miteinander verbunden sind,
der obere Steckverbinder (610a) in Richtung der geöffneten Oberfläche des Steckverbinder-Durchgangslochabschnitts (440) des Löschtanks (400) angeordnet ist, und
der untere Steckverbinder (610b) in Richtung des Steckverbinder-Durchgangslochabschnitts (370) des Pack-Gehäuses (300) angeordnet ist.

6. Batteriepack nach Anspruch 5, wobei:
die elektrische Verbindungseinheit (600) ferner ein Steckverbindergehäuse (620) aufweist,
eine Oberfläche des Steckverbindergehäuses (620) einen Vorsprungsabschnitt (620a) aufweist und der obere Steckverbinder (610a) auf dem Vorsprungsabschnitt (620a) des Steckverbindergehäuses (620) vorgesehen ist,
der obere Steckverbinder (610a) und der Vorsprungsabschnitt (620a) des Steckverbindergehäuses (620) innerhalb des Steckverbinder-Durchgangslochabschnitts (440) mit einer rohrförmigen Gestalt, die von der Oberfläche des Löschtanks (400) nach oben ragt, angeordnet sind, und
der untere Steckverbinder (610b) an der Unterseite des Steckverbindergehäuses (620) vorgesehen ist.

7. Batteriepack nach Anspruch 6, wobei:
der Vorsprungsabschnitt (620a) des Steckverbindergehäuses (620) ferner eine Rippe (621) aufweist, die sich in einer Auf- und Abwärtsrichtung erstreckt,
der Steckverbinder-Durchgangslochabschnitt (440) des Löschtanks (400) ferner einen Rippenaufnahmeabschnitt (441) aufweist, der eine Gestalt besitzt, die von der Außenfläche des Steckverbinder-Durchgangslochabschnitts (440) nach außen ragt und sich in der Auf- und Abwärtsrichtung erstreckt, und
die Rippe (621) so mit dem Rippenaufnahmeabschnitt (441) gekoppelt ist, dass der Steckverbinder (610) und das Steckverbindergehäuse (620) innerhalb des Steckverbinder-Durchgangslochabschnitts (440) fixiert sind.

8. Batteriepack nach Anspruch 1, wobei:
das Pack-Gehäuse (300) ferner einen Satz aus einem männlichen Führungselement (340a) und einem weiblichen Führungselement (340b) aufweist, um das Stapeln zwischen der Mehrzahl von gestapelten Batteriepacks zu erleichtern, und
bei den in einer Mehrzahl gestapelten Batteriepacks ein männliches Führungselement (340a) eines der beiden zueinander benachbarten Batteriepacks mit einem weiblichen Führungselement (340b) des anderen der beiden zueinander benachbarten Batteriepacks gekoppelt ist.

9. Batteriepack nach Anspruch 8, wobei:
das männliche Führungselement (340a) eine Plattenform aufweist, die von einem oberen Endteil des Pack-Gehäuses nach oben ragt, und
das weibliche Führungselement (340b) an einem unteren Endteil des Pack-Gehäuses vorgesehen ist und eine Kerbenform, eine Öffnungsform oder eine konkave Form aufweist, so dass das männliche Führungselement (340a) aufgenommen werden kann.

10. Batteriepack nach Anspruch 8, wobei:
beide Seiten eines oberen Endteils des männlichen Führungselements (340a) eine abgeflachte Form aufweisen.

11. Batteriepack nach Anspruch 8, wobei:
der Satz aus dem männlichen Führungselement (340a) und dem weiblichen Führungselement (340b) auf mindestens einer von der Vorderfläche oder der Rückfläche des Batteriepacks vorgesehen ist.

12. Batteriepack nach Anspruch 8, wobei:
der Satz aus dem männlichen Führungselement (340a) und dem weiblichen Führungselement (340b) jeweils auf jeder der beiden einander zugewandten Seitenflächen des Batteriepacks vorgesehen ist.

13. Batteriepack nach Anspruch 1, wobei:
das Pack-Gehäuse (300) ferner einen Satz aus einem männlichen Befestigungselement (350a) und einem weiblichen Befestigungselement (350b) aufweist, um zwischen der Mehrzahl von gestapelten Batteriepacks befestigt zu werden, und
bei den in einer Mehrzahl gestapelten Batteriepacks ein männliches Befestigungselement (350a) eines der beiden zueinander benachbarten Batteriepacks mit einem weiblichen Befestigungselement (350b) des anderen der beiden zueinander benachbarten Batteriepacks gekoppelt ist.

14. Batteriepack nach Anspruch 13, wobei:
das männliche Befestigungselement (350a) einen Verriegelungsanschlag (350a-1) aufweist,
das weibliche Befestigungselement (350b) einen öffnungsförmigen Verriegelungshaken (350b-1) aufweist, und
der Verriegelungsanschlag (350a-1) des männlichen Befestigungselements (350a) mit dem Verriegelungshaken (350b-1) des weiblichen Befestigungselements (350b) verriegelt und gekoppelt ist.

15. Batteriepack nach Anspruch 1, wobei:
die Mehrzahl von gestapelten Batteriepacks in einer Auf- und Abwärtsrichtung gestapelt ist.

16. Batteriepack nach Anspruch 1, wobei:
das Löschmittel ein Löschmittel in einem flüssigen Zustand ist.

17. Energiespeichersystem, umfassend das Batteriepack nach Anspruch 1.

## Revendications

1. Bloc-batterie comprenant :
un ensemble de modules de cellule (100) comprenant un empilement de cellules de batterie dans lequel une pluralité de cellules de batterie (110) sont empilées ;
une unité de connexion électrique (600) comprenant un connecteur (610) configuré pour la connexion électrique entre des blocs-batteries empilés en une pluralité de nombres ;
un boîtier de bloc (300) qui loge l'ensemble de modules de cellule (100) et l'unité de connexion électrique à l'intérieur de celui-ci et est ouvert au niveau de sa surface supérieure ; et
dans lequel le boîtier de bloc (300) comprend une partie de trou traversant de connecteur (370) sous la forme d'une ouverture sur une surface inférieure du boîtier de bloc (300) de sorte que le connecteur (610) puisse être connecté électriquement à un bloc-batterie empilé sur une partie inférieure ; et
**caractérisé en ce qu'**il comprend :
un réservoir d'extinction d'incendie (400) qui recouvre la partie supérieure du boîtier de bloc (300), le réservoir d'extinction d'incendie (400) contenant un agent d'extinction d'incendie dans un espace interne du réservoir d'extinction d'incendie (400),
dans lequel le réservoir d'extinction d'incendie (400) comprend une partie de trou traversant de connecteur (440) ayant une ouverture sur une surface supérieure du réservoir d'extinction d'incendie (400) de sorte que le connecteur (610) puisse être connecté électriquement à un bloc-batterie empilé sur une partie supérieure.

2. Bloc-batterie selon la revendication 1, dans lequel :
la partie de trou traversant de connecteur (440) a une forme tubulaire qui fait saillie vers le haut depuis la surface supérieure du réservoir d'extinction d'incendie (400), et
dans les blocs-batteries empilés en une pluralité de nombres, la partie de trou traversant de connecteur (440) du réservoir d'extinction d'incendie (400) du bloc-batterie empilé sur la partie inférieure est insérée dans la partie de trou traversant de connecteur (370) du boîtier de bloc du bloc-batterie empilé sur la partie supérieure.

3. Bloc-batterie selon la revendication 2, dans lequel :
la partie de trou traversant de connecteur (440) du réservoir d'extinction d'incendie (400) comprend en outre un organe de guidage (442), dans lequel l'organe de guidage (442) fait saillie vers l'extérieur depuis la surface externe de la partie de trou traversant de connecteur (440) et s'étend dans la direction vers le haut et vers le bas, et présente une structure dont la partie supérieure est chanfreinée, et
dans les blocs-batteries empilés en une pluralité de nombres, la partie de trou traversant de connecteur (440) du réservoir d'extinction d'incendie (400) du bloc-batterie empilé sur la partie inférieure glisse le long de l'organe de guidage (442), et est insérée dans la partie de trou traversant de connecteur (370) du boîtier de bloc (300) du bloc-batterie empilé sur la partie supérieure.

4. Bloc-batterie selon la revendication 1, dans lequel :
lors d'une observation du bloc-batterie par le haut ou par le bas, la partie de trou traversant de connecteur (370) du boîtier de bloc et la partie de trou traversant de connecteur (440) du réservoir d'extinction d'incendie (400) sont prévues à des positions correspondant l'une à l'autre en une rangée.

5. Bloc-batterie selon la revendication 1, dans lequel :
le connecteur (610) comprend un connecteur supérieur (610a) pour une connexion électrique avec le bloc-batterie empilé sur la partie supérieure et un connecteur inférieur (610b) pour une connexion électrique avec le bloc-batterie empilé sur la partie inférieure, dans lequel le connecteur supérieur (610a) et le connecteur inférieur (610b) sont connectés électriquement l'un à l'autre,
le connecteur supérieur (610a) est agencé vers la surface supérieure ouverte de la partie de trou traversant de connecteur (440) du réservoir d'extinction d'incendie (400), et
le connecteur inférieur (610b) est agencé vers la partie de trou traversant de connecteur (370) du boîtier de bloc (300).

6. Bloc-batterie selon la revendication 5, dans lequel :
l'unité de connexion électrique (600) comprend en outre un logement de connecteur (620),
une surface supérieure du logement de connecteur (620) comprend une partie en saillie (620a), et le connecteur supérieur (610a) est prévu sur la partie en saillie (620a) du logement de connecteur (620),
le connecteur supérieur (610a) et la partie en saillie (620a) du logement de connecteur (620) sont agencés à l'intérieur de la partie de trou traversant de connecteur (440) d'une forme tubulaire faisant saillie vers le haut depuis la surface supérieure du réservoir d'extinction d'incendie (400), et
le connecteur inférieur (610b) est prévu sur la surface inférieure du logement de connecteur (620).

7. Bloc-batterie selon la revendication 6, dans lequel :
la partie en saillie (620a) du logement de connecteur (620) comprend en outre une nervure (621) s'étendant dans une direction vers le haut et vers le bas,
la partie de trou traversant de connecteur (440) du réservoir d'extinction d'incendie (400) comprend en outre une partie de logement de nervure (441) ayant une forme qui fait saillie vers l'extérieur depuis la surface externe de la partie de trou traversant de connecteur (440) et s'étend dans la direction vers le haut et vers le bas, et
la nervure (621) est couplée à la partie de logement de nervure (441) de telle sorte que le connecteur (610) et le logement de connecteur (620) soient fixés à l'intérieur de la partie de trou traversant de connecteur (440).

8. Bloc-batterie selon la revendication 1, dans lequel :
le boîtier de bloc (300) comprend en outre un ensemble d'organe de guidage mâle (340a) et d'organe de guidage femelle (340b) de façon à faciliter l'empilement entre la pluralité de blocs-batteries empilés, et
dans les blocs-batteries empilés en une pluralité de nombres, un organe de guidage mâle (340a) de l'un des deux blocs-batteries adjacents l'un à l'autre est couplé à un organe de guidage femelle (340b) de l'autre des deux blocs-batteries adjacents l'un à l'autre.

9. Bloc-batterie selon la revendication 8, dans lequel :
l'organe de guidage mâle (340a) a une forme de plaque qui fait saillie vers le haut depuis une partie d'extrémité supérieure du boîtier de bloc, et
l'organe de guidage femelle (340b) est prévu au niveau d'une partie d'extrémité inférieure du boîtier de bloc, et a une forme d'encoche, une forme d'ouverture ou une forme concave de sorte que l'organe de guidage mâle (340a) puisse être logé.

10. Bloc-batterie selon la revendication 8, dans lequel :
les deux côtés d'une partie d'extrémité supérieure de l'organe de guidage mâle (340a) ont une forme chanfreinée.

11. Bloc-batterie selon la revendication 8, dans lequel :
l'ensemble de l'organe de guidage mâle (340a) et de l'organe de guidage femelle (340b) est prévu sur au moins l'une de la surface avant ou de la surface arrière du bloc-batterie.

12. Bloc-batterie selon la revendication 8, dans lequel :
l'ensemble de l'organe de guidage mâle (340a) et de l'organe de guidage femelle (340b) est respectivement prévu sur chacune des deux surfaces latérales du bloc-batterie qui se font face.

13. Bloc-batterie selon la revendication 1, dans lequel :
le boîtier de bloc (300) comprend en outre un ensemble d'organe de fixation mâle (350a) et d'organe de fixation femelle (350b) de façon à être fixés entre la pluralité de blocs-batteries empilés, et
dans les blocs-batteries empilés en une pluralité de nombres, un organe de fixation mâle (350a) de l'un des deux blocs-batteries adjacents l'un à l'autre est couplé à un organe de fixation femelle (350b) de l'autre des deux blocs-batteries adjacents l'un à l'autre.

14. Bloc-batterie selon la revendication 13, dans lequel :
l'organe de fixation mâle (350a) comprend une butée de verrouillage (350a-1),
l'organe de fixation femelle (350b) comprend un crochet de verrouillage en forme d'ouverture (350b-1), et
la butée de verrouillage (350a-1) de l'organe de fixation mâle (350a) est verrouillée et couplée avec le crochet de verrouillage (350b-1) de l'organe de fixation femelle (350b).

15. Bloc-batterie selon la revendication 1, dans lequel :
la pluralité de blocs-batteries empilés sont empilés dans une direction vers le haut et vers le bas.

16. Bloc-batterie selon la revendication 1, dans lequel :
l'agent d'extinction d'incendie est un agent d'extinction d'incendie à l'état liquide.

17. Système de stockage d'énergie comprenant le bloc-batterie selon la revendication 1.
